(19) Europäisches Patentamt
European Patent Office
Office européen des brevets

(11) Publication number: **0 257 150 B1**

(12) # EUROPEAN PATENT SPECIFICATION

(45) Date of publication of patent specification: **25.03.92**

(51) Int. Cl.5: **C08L 79/08**, C08L 71/00, C08L 65/00

(21) Application number: **86306509.0**

(22) Date of filing: **21.08.86**

(54) **Miscible blends of a poly(aryl ether ketone) and a poly(imide).**

(43) Date of publication of application:
**02.03.88 Bulletin 88/09**

(45) Publication of the grant of the patent:
**25.03.92 Bulletin 92/13**

(84) Designated Contracting States:
**DE FR GB IT NL**

(56) References cited:
**EP-A- 0 138 129**
**EP-A- 0 163 464**
**EP-A- 0 166 450**
**EP-A- 0 199 999**

(73) Proprietor: **AMOCO CORPORATION**
**200 East Randolph Drive**
**Chicago Illinois 60680(US)**

(72) Inventor: **Harris, James Elmer**
**211 Birchview Drive**
**Piscataway New Jersey 08854(US)**
Inventor: **Robeson, Lloyd Mahlon**
**Route 1 Box 244**
**Whitehouse Station New Jersey 08889(US)**
Inventor: **Eckstein, Bernard Hans**
**8930 Albion Road**
**North Royalton New Jersey 44133(US)**
Inventor: **Cliffton, Michael Duane**
**205 Birchview Drive**
**Piscataway New Jersey 08854(US)**

(74) Representative: **Baverstock, Michael George Douglas et al**
**BOULT, WADE & TENNANT 27 Furnival Street**
**London, EC4A 1PO(GB)**

EP 0 257 150 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to miscible blends of a poly(aryl ether ketone) and a poly(imide) which are useful in the manufacture of extruded film, continuous fiber composites and injection molded articles.

Poly(aryl ether ketone)s are a known class of engineering polymers. Several poly(aryl ether ketone)s are highly crystalline with melting points above 300°C. Two of these crystalline poly(aryl ketone)s are commercially available and are of the following structure:

(I) 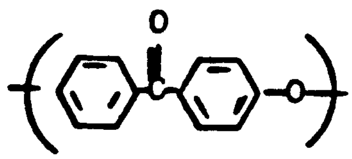

(II) 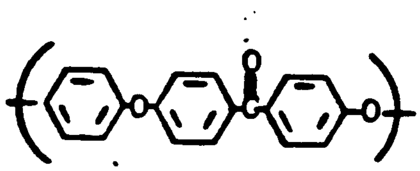

Over the years, there has been developed a substantial body of patent and other literature directed to the formation and properties of poly(aryl ethers) (hereinafter called "PAE"). Some of the earliest work, such as by Bonner, U.S. Patent No. 3,065,205, involves the electrophilic aromatic substitution (e.g., Friedel-Crafts catalyzed) reaction of aromatic diacylhalides with unsubstituted aromatic compounds such as diphenyl ether. The evolution of this class to a much broader range of PAE's was achieved by Johnson et al., Journal of Polymer Science, A-1, vol. 5, 1967, pp. 2415-2427, Johnson et al., U.S. Patent Nos. 4,107,837 and 4,175,175. Johnson et al. show that a very broad range of PAE can be formed by the nucleophilic aromatic substitution (condensation) reaction of an activated aromatic dihalide and an aromatic diol. By this method, Johnson et al. created a host of new PAE's including a broad class of poly(aryl ether ketones), hereinafter called "PAEK'S".

In recent years, there has developed a growing interest in PAEK's as evidenced by Dahl, U.S. Patent No. 3,953,400; Dahl et al., U.S. Patent No. 3.956,240; Dahl, U.S. Patent No. 4,247,682; Rose et al., U.S. Patent No. 4,320,224; Maresca, U.S. Patent No. 4,339,568; Atwood et al., Polymer, 1981, vol. 22, August pp. 1096-1103; Blundell et al., Polymer, 1983 vol. 24, August, pp. 953-958, Atwood et al., Polymer Preprints, 20, No. 1, April 1979, pp. 191-194; and Rueda et al., Polymer Communications, 1983, vol. 24, September, pp. 258-260. In early to mid-1970, Raychem Corp. commercially introduced a PAEK called STILAN™, a polymer whose acronym is PEK, each ether and keto group being separated by 1,4-phenylene units. In 1978, Imperial Chemical Industries PLC (ICI) commercialized a PAEK under the trademark Victrex PEEK. As PAEK is the acronym of poly(aryl ether ketone), PEEK is the acronym of poly(ether ether ketone) in which the 1,4-phenylene units in the structure are assumed.

Thus, PAEK's are well known; they can be synthesized from a variety of starting materials; and they can be made with different melting temperatures and molecular weights. The PAEK's are crystalline, and as shown by the Dahl and Dahl et al. patents, supra, at sufficiently high molecular weights they can be tough, i.e., they exhibit high values of >345 kN/m$^2$ (>50 ft-lbs/in$^2$) in the tensile impact test (ASTM D-1822). They have potential for a wide variety of uses, but because of the significant cost to manufacture them, they are expensive polymers. Their favorable properties class them in the upper bracket of engineering polymers.

PAEK's may be produced by the Friedel-Crafts catalyzed reaction of aromatic diacylhalides with unsubstituted aromatic compounds such as diphenyl ether as described in, for example, U.S. Patent No. 3,065,205. These processes are generally inexpensive processes; however, the polymers produced by these processes have been stated by Dahl et al., supra, to be brittle and thermally unstable. The Dahl patents, supra, allegedly depict more expensive processes for making superior PAEK's by Friedel-Crafts catalysis. In contrast, PAEK's such as PEEK made by nucleophilic aromatic substitution reactions are produced from expensive starting fluoro monomers, and thus would be classed as expensive polymers.

These poly(aryl ether ketone)s exhibit an excellent combination of properties; i.e., thermal and hydrolytic stability, high strength and toughness, wear and abrasion resistance and solvent resistance. Thus, articles molded from poly(aryl ether ketone)s have utility where high performance is required. However, in some applications such as those where the poly(aryl ether ketone) is to be used as a thermoplastic

composite matrix resin, its glass transition temperature (Tg) may not be as high as desired for the particular application. This is because polymers, even crystalline polymers, exhibit excessive loss of modulus, strength and creep resistance above their Tgs. This loss in properties may not be acceptable in cases where the materials are to be used as thermoplastic composite matrix resins.

Polyimides are a well known class of polymers. They are described by Kirk-Othmer, Encyclopedia of Chemical Technology, 3rd Ed., Vol. 18, pp. 704-719. C. Arnold, Jr., in the Journal of Polymer Science; Macromolecular Reviews, Vol. 14, pp. 265-378 (1979) devotes a portion of the article entitled: "Stability of High-Temperature Polymers," at pp. 322-333, to polyimides. They are also discussed by Elkin in Stanford Research Institute Report Number 86 (Menlo Park, Ca.) entitled "High Temperature Polymers" (1973). The physical and chemical characteristics of polyimides have been well documented.

In general, polyimides (especially aromatic polyimides) have excellent heat resistance but are difficult to process. According to P. E. Cassidy et al (cited above), "wholly aromatic polyimide molding powders must be fabricated by sintering at high temperature and pressure." Injection molding and extrusion are thus not possible. J.M. Adduci in Polyimides, K. L. Mittal, Editor, 1984, published by Plenum Press, New York, states on page 1024:

"Polyimides, produced by the chemical reaction of an aromatic dianhydride and an aromatic diamine, were the first of the aromatic thermally stable polymers introduced in the mid-1950's. Polyimides did not behave as thermoplastics even though they had linear structures. Polymer backbones comprised of rigid, inherently stable, aromatic phenylene and imide rings imparted polyimides with excellent thermal oxidative properties and at the same time made them exceedingly difficult to process because of their high and sometimes indeterminate melting points."

According to T. P. Gannett et al., in U.S. Patent 4,485,140, the polyimide of the structural formula:

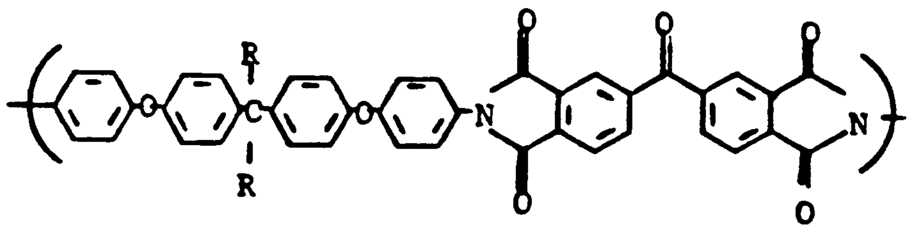

where R is $-CH_3$ or $-CF_3$, is typical of aromatic polyimides which are generally infusible. According to Alberino et al, U.S 3,708,458, a polyimide having recurring units of the formula:

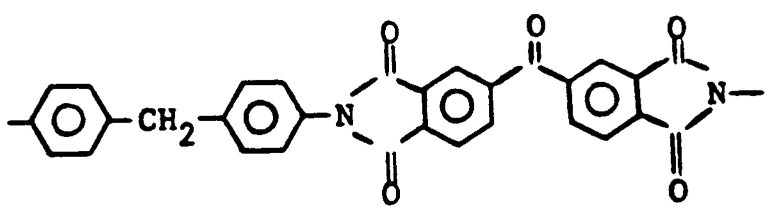

"possesses highly useful structural strength properties but .... is difficult to mold, by compression at elevated temperatures, because of its relatively poor flow properties in the mold." The patentees developed a polyimide to overcome, to some extent, these difficulties by including in the polymer backbone a certain proportion of the reaction product of 3,3′, 4,4′-benzophenone tetracarboxylic dianhydride with 2,4- or 2,6-toluene diamine (or the corresponding diisocyanates). The copolymers were regarded as having better flow properties in the mold even though such difficult molding procedures as "sintering or hot processing" were the criteria used.

Thus, it can be said that aromatic polyimides in general do not lend themselves easily to melt fabrication except perhaps by compression molding.

Recently, the processability of polyimides has been improved by blending or alloying them with other resins which are themselves more easily melt processable by virtue of being more easily thermoformed and injection molded. For example, U.S. Patent No. 4,293,670 to Robeson et al. discloses blends of polyarylether resins and polyetherimide resins having excellent mechanical compatibility and good impact strength and environmental stress crack resistance. EP-A-138 129 describes blends of a select polyarylketone and a polyetherimide. EP-A-166 450 describes blends of a polyamideimide and a poly(aryl ether

ketone).

Japanese Patent Publications 59-184-254 (October 19, 1984) and 84-187,054 (October 24, 1984), both to Toray Co., Ltd., describe blends of poly(amide-imides), polyamides, and poly(ether-imides) with crystalline poly(aryl ether ketones). According to these publications, the poly(amide-imides) may contain up to 70 mole % of a polyimide. The addition of the foregoing polymers to poly(aryl ether ketones) is stated to improve the heat deformation temperature as measured according to ASTM method D-648. It is obviously assumed that the resins in question have a Tg above 150 ° C, and preferably, above 170 ° C.

However, the Japanese publications do not provide any examples wherein polyimides, as opposed to poly(ether imides), are used. A possible miscibility and the resulting good properties of a blend of a polyimide and of a poly(aryl ether ketone) must, therefore, be considered as purely speculative from the point of view of the above-mentioned publications.

Also, poly(imides) in general, do not necessarily improve the heat deformation point, or heat deflection (distortion) temperatures, as sometimes referred to, of poly(aryl ether ketones). For example, EP-A-199 999 (a document in the Article 54(3) EPC field) describes that a blend of 25 parts of the poly(imide) of the formula:

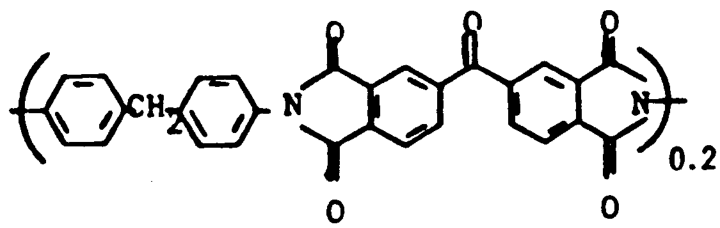

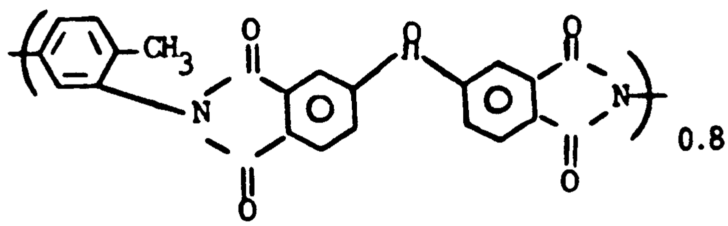

and 75 parts by weight of the poly(aryl ether ketone) of the formula:

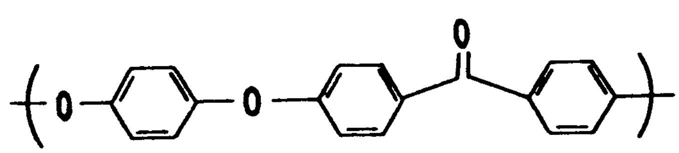

has a lower heat deflection temperature (151 ° C) than the poly(aryl ether ketone) itself (160 ° C), even though this polyimide clearly meets the criteria of the foregoing Japanese publication since its Tg of 317 ° C is well above their preferred value of 170 ° C.

The poly(imide) blends with poly(aryl ether ketones) described in EP-A-199 999 are different from the poly(imides) of the present invention in that the former form immiscible (two phase) blends while the poly(imides) of the present invention yield miscible blends with poly(aryl ether ketones). Miscibility is highly unexpected for a blend of two polymers and in generally not predictable.

In the field of miscibility or compatibility of polymer blends, the art has found predictability to be unattainable, even though considerable work on the matter has been done. According to authorities:

(A) "It is well known that compatible polymer blends are rare." Wang and Cooper, Journal of Polymer Science, Polymer Physics Edition, vol. 21, p. 11 (1983).

(B) "Miscibility in polymer-polymer blends is a subject of widespread theoretical as well as practical interest currently. In the past decade or so, the number of blend systems that are known to be miscible has increased considerably. Moreover, a number of systems have been found that exhibit upper and lower critical solution temperatures, i.e., complete miscibility only in limited temperature ranges. Modern

thermodynamic theories have had limited success to data in predicting miscibility behavior in detail. These limitations have spawned a degree of pessimism regarding the likelihood that any practical theory can be developed that can accommodate the real complexities that nature has bestowed on polymer-polymer interactions." Kambour, Bendler, Bopp, Macromolecules, 1983, 16, 753.

(C) "The vast majority of polymer pairs form two-phase blends after mixing as can be surmised from the small entropy of mixing for very large molecules. These blends are generally characterized by opacity, distinct thermal transitions, and poor mechanical properties. However, special precautions in the preparation of two-phase blends can yield composites with superior mechanical properties. These materials play a major role in the polymer industry, in several instances commanding a larger market than either of the pure components." Olabisi, Robeson, and Shaw, Polymer-Polymer Miscibility, 1979, published by Academic Press, New York, N.Y., p. 7.

(D) "It is well known that, regarding the mixing of thermoplastic polymers, incompatibility is the rule and miscibility and even partial miscibility is the exception. Since most thermoplastic polymers are immiscible in other thermoplastic polymers, the discovery of a homogeneous mixture or partially miscible mixture of two or more thermoplastic polymers is, indeed, inherently unpredictable with any degree of certainty; for example, see P. J. Flory, Principles of Polymer Chemistry, Cornell University press, 1953, Chapter 13, p. 555." Younes, U.S. Patent No. 4,371,672.

(E) "The study of polymer blends has assumed an ever increasing importance in recent years and the resulting research effort has led to the discovery of a number of miscible polymer combinations. Complete miscibility is an unusual property in binary polymer mixtures which normally tend to form phase-separated systems. Much of the work has been of a qualitative nature, however, and variables such as molecular weight and conditions of blend preparation have often been overlooked. The criteria for establishing miscibility are also varied and may not always all be applicable to particular systems." Saeki, Cowie and McEwen, Polymer, 1983, vol. 25, January, p. 60.

Thus, miscible polymer blends are not common. The criteria for determining whether or not two polymers are miscible are now well established. According to Olabisi, et al., Polymer-Polymer Miscibility, 1979, published by Academic Press, New York, N.Y., p. 120:

"The most commonly used method for establishing miscibility in polymer-polymer blends or partial phase mixing in such blends is through determination of the glass transition (or transitions) in the blend versus those of the unblended constituents. A miscible polymer blend will exhibit a single glass transition between the Tg's of the components with a sharpness of the transition similar to that of the components. In cases of borderline miscibility, broadening of the transition will occur. With cases of limited miscibility, two separate transitions between those of the constituents may result, depicting a component 1-rich phase and a component 2-rich phase. In cases where strong specific interactions occur, the Tg may go through a maximum as a function of concentration. The basic limitation of the utility of glass transition determinations in ascertaining polymer-polymer miscibility exists with blends composed of components which have equal or similar (<20 °C difference) Tg's, whereby resolution by the techniques to be discussed of two Tg's is not possible."

W. J. MacKnight et al., in Polymer Blends, D. R. Paul and S. Newman, eds, 1978, published by Academic Press, New York, N.Y., state on page 188:

"Perhaps the most unambiguous criterion of polymer compatibility is the detection of a single glass transition whose temperature is intermediate between those corresponding to the two component polymers."

In this passage, it is clear from the omitted text that by compatibility the authors mean miscibility, i.e., single phase behavior. See, for example, the discussion in Chapter 1 by D. R. Paul in the same work.

It has now been found that blends of poly(aryl ether ketone)s and select poly(imides) are very compatible; in fact, they tend to form one phase in the amorphous state, and thus are miscible systems. As a result, such blends can significantly improve the processability of the poly(imide). Further, by increasing its Tg, the ultimate use temperature of the poly(aryl ether ketone) is significantly increased.

Due to the miscibility of these blends, injection molded samples of the blends are transparent even though the poly(aryl ether ketone) is opaque under normal injection molding conditions. However, with proper annealing, opacity due to crystallization of the poly(aryl ether ketone) can be accomplished.

The blends of poly(imides) and poly(aryl ether ketone)s may be used in a number of diverse high performance applications. Polyimide modification of the poly(aryl ether ketone) may be used in composites containing carbon or other fiber where improved stiffness at 175 °C (350 °F) is required. This is a specific temperature requirement for certain composite applications, and the increased Tg of the poly(aryl ether ketone) with the poly(imide) improves this deficiency for poly(aryl ether ketone)s having low Tg's.

Further, the addition of the poly(aryl ketone) to the poly(imide) results in an enhancement in toughness.

The blends exhibit toughness which often exceed that of either constituent.

Blending the amorphous poly(imide) with the crystalline poly(aryl ether ketone) results in a blend which has reduced mold shrinkage and increased dimensional stability as compared to the poly(aryl ether ketone).

The blends of this invention comprise

(a) at least one poly(aryl ether ketone) having a reduced viscosity of from 0.4 to 5.0 dl/g, as measured in concentrated sulphuric acid at 25° C, in amount from 2 to 98% by weight, and

(b) at least one thermoformable polyimide homo- or copolymer in amount from 2 to 98% by weight and having repeating units of the formula:

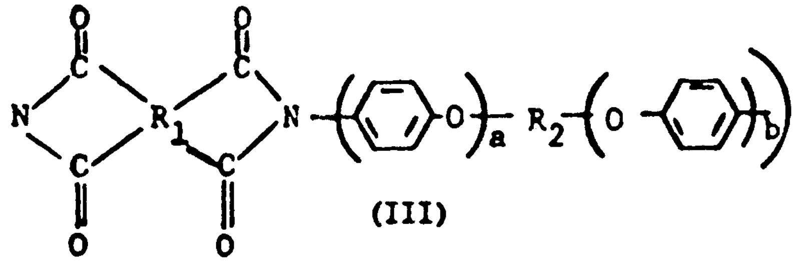

(III)

wherein

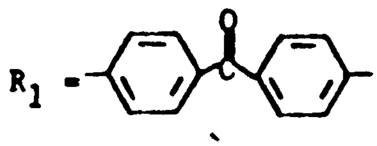

and

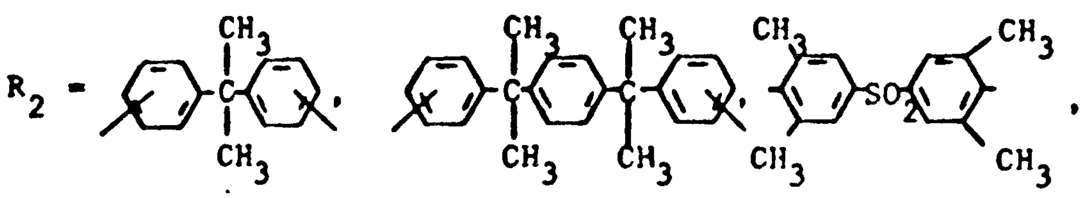

and a and b are 0 or 1 and may be the same or different.

$R_3$ is a $C_1$ to $C_5$ alkyl radical, and

$R_4$ is a divalent, saturated or unsaturated aliphatic hydrocarbon radical, particularly an alkylene or alkylidene radical having 1 to 3 carbon atoms or a cycloalkylidene or cycloalkylene radical having up to and including 9 carbon atoms

provided that said polyimide does not have the structure:

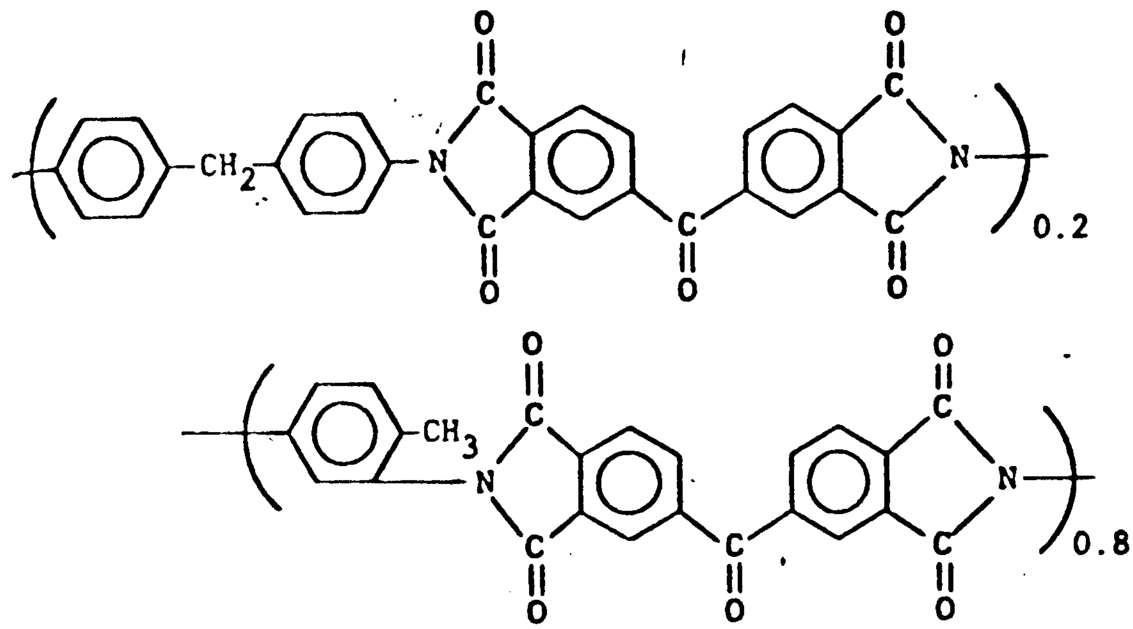

The polyimides which are suitable for use herein have the structure (III) described above. These polyimides are prepared by methods well known in the art and as set forth, for example in U.S. Patent Nos. 3,208,458, 3,652,409, 3,179,634, 4,485,140 and 4,111,906. The polyimides may be prepared, for example, by reacting, at temperatures ranging from ambient to about 175 ° C, an organic diamine with a tetracarboxylic acid dianhydride. Altenatively, tetracarboxylic acid dianhydride can be reacted with a diisocyanate, in place of the diamine. Reaction of the isocyanate with the anhydride group yields a seven member cyclic intermediate which spontaneously collapses to form the imide with evolution of carbon dioxide.

Within the scope of this invention is a blend as defined above in which the polyimide is of the formula:

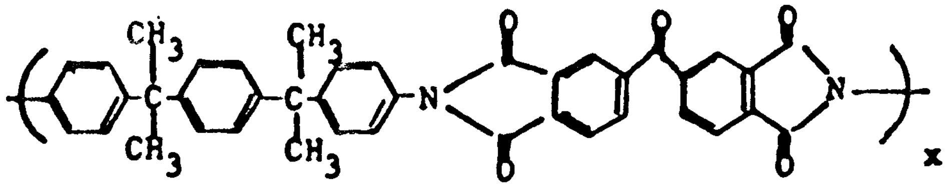

and

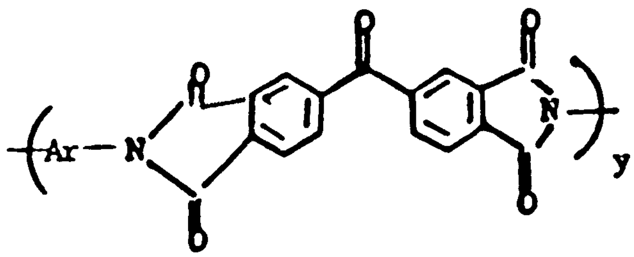

or

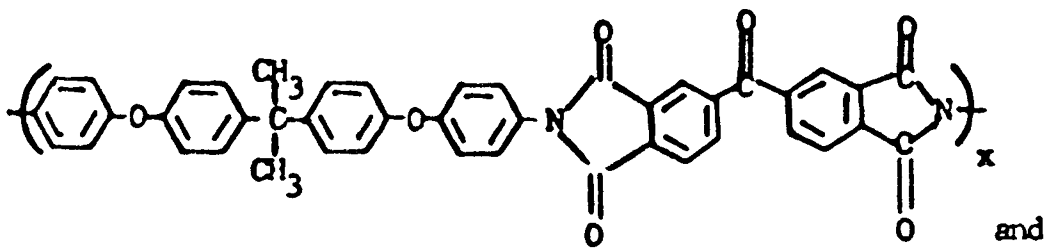

and

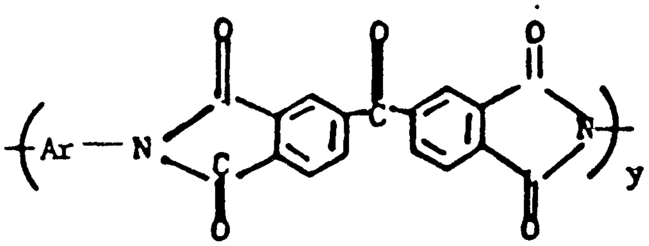

wherein x is 0.5 to 0.1 and y is 1-x, and Ar is selected from one or more of the following:

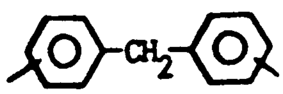

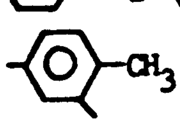

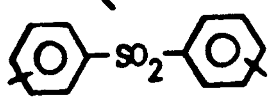

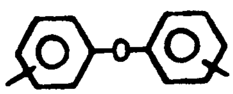

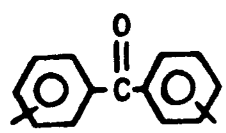

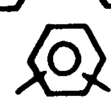

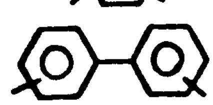

The crystalline poly(aryl ether ketone)s which are suitable for use herein can be generically characterized as containing repeating units of one or more of the following formulae:

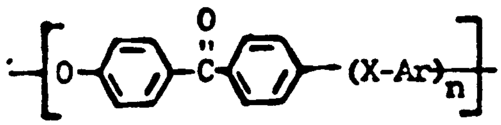

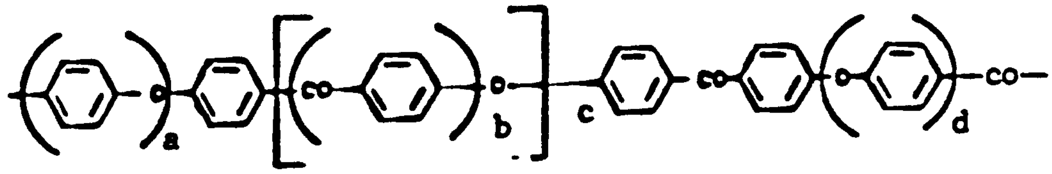

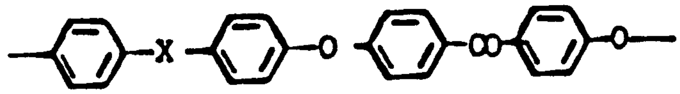

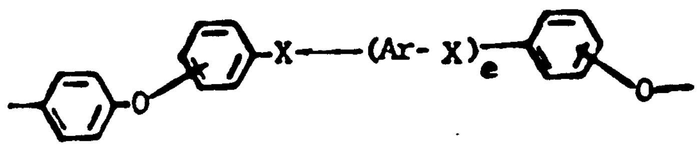

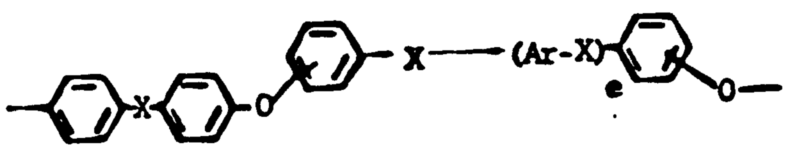

wherein Ar is independently a divalent aromatic radical selected from phenylene, biphenylene or naphthylene, X is independently O,

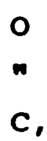

or a direct bond and n is an integer of from 0 to 3, b, c, d and e are 0 to 1 and a is an integer of 1 to 4 and preferably d is 0 when b is 1.

Preferred poly(aryl ketone)s include those having repeating units of the formula:

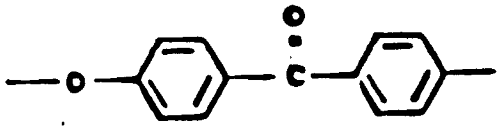

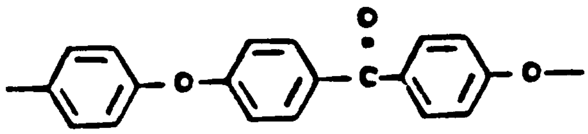

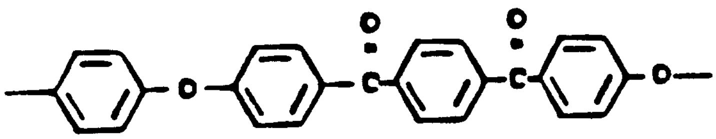

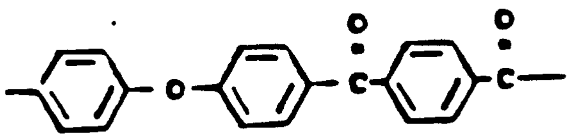

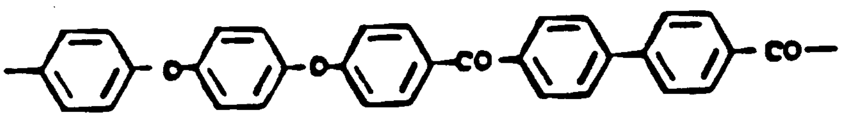

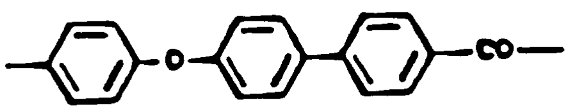

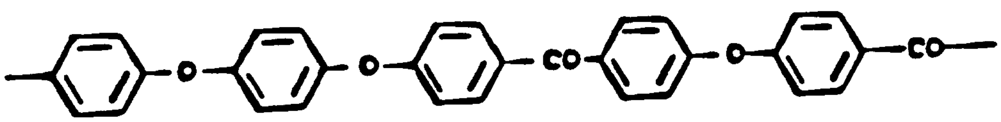

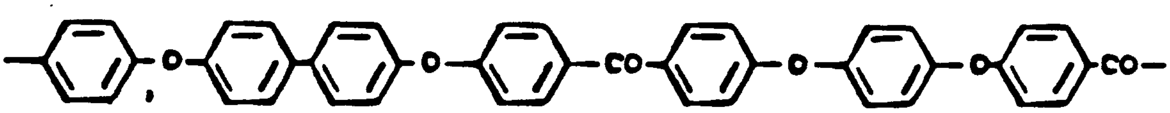

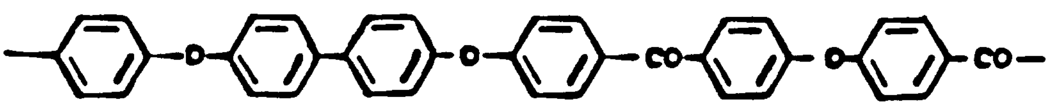

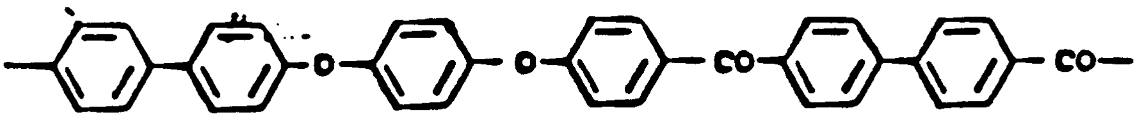

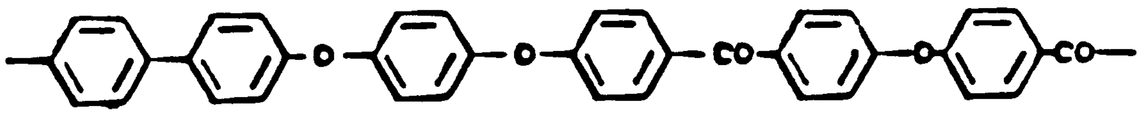

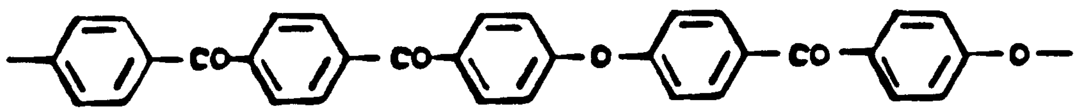

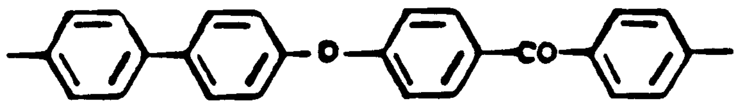

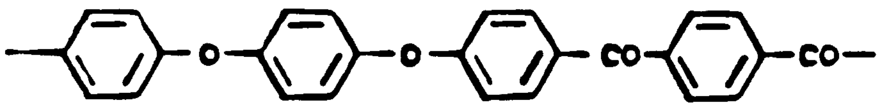

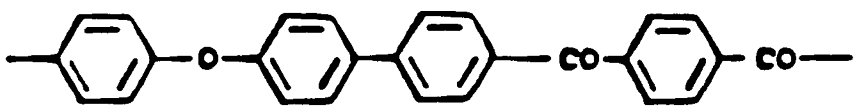

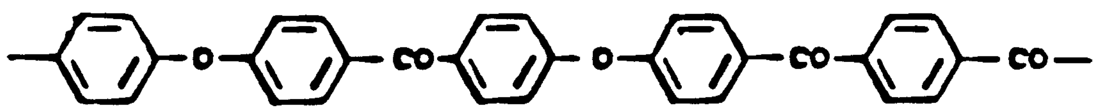

These poly(aryl ketone)s are prepared by methods well known in the art. One such method comprises heating a substantially equimolar mixture of at least one bisphenol and at least one dihalobenzoid compound or at least one halophenol compound. Preferred bisphenols in such a process include:

hydroquinone,
4,4′-dihydroxybenzophenone,
4,4′-dihydroxybiphenyl, and
4,4′-dihydroxydiphenyl ether.

Preferred dihalo and dihalobenzoid compounds include:

4-(4-chlorobenzoyl)phenol,
4-(4-fluorobenzoyl)phenol,
4,4′-difluorobenzophenone,
4,4′-dichlorobenzophenone,
4-chloro-4′-fluorobenzophenone,

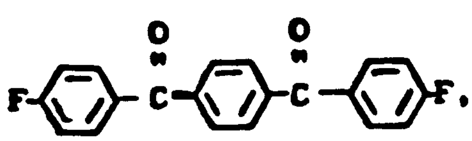 and

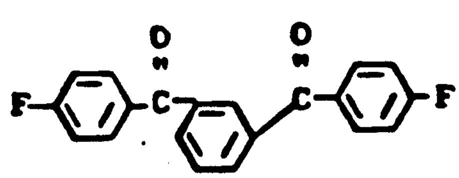

The poly(aryl ketone)s may be produced by the process as described in, for example, U.S. Patent 4,176,222. This process comprises heating in the temperature range of 100° to 400°C., (i) a substantially equimolar mixture of (a) at least one bisphenol and (b) at least one dihalobenzenoid compound, and/or (ii) at

least one halophenol, in which in the dihalobenzenoid compound or halophenol, the halogen atoms are activated by -CO- groups ortho or para thereto, with a mixture of sodium carbonate or bicarbonate and a second alkali metal carbonate or bicarbonate, the alkali metal of said second alkali metal carbonate or bicarbonate having a higher atomic number than that of sodium, the amount of said second alkali metal carbonate or bicarbonate being such that there are 0.001 to 0.2 gram atoms of said alkali metal of higher atomic number per gram atom of sodium, the total amount of alkali metal carbonate or bicarbonate being such that there is at least one alkali metal atom for each phenol group present, and thereafter separating the polymer from the alkali metal halide.

Also, poly(aryl ketone)s such as those containing repeating units of the formula:

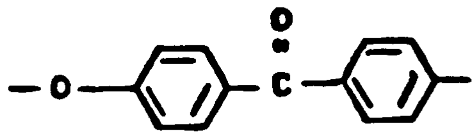

may be produced by Friedel-Craft reactions utilizing hydrogen fluoride-boron trifluoride catalysts as described, for example, in U.S. Patent 3,953,400.

Additionally, poly(aryl ketones) of the following formula:

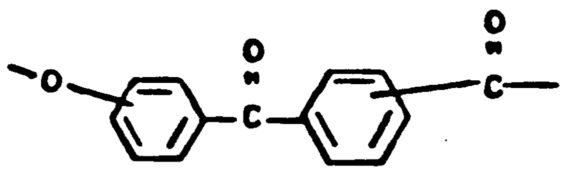

may be prepared by Friedel-Craft reactions using a boron fluoride-hydrogen fluoride catalyst as described in, for example, U.S. Patents 3,441,538; 3,442,857 and 3,516,966.

The polyketones may also be prepared according to the process as described in, for example, U.S. Defensive Publication T 103,703 and U.S. Patent 4,396,755. In such processes, reactants such as (a) an aromatic monocarboxylic acid, (b) a mixture of at least one aromatic dicarboxylic acid, and an aromatic hydrocarbon, and (c) combinations of (a) and (b) are reacted in the presence of a fluoroalkane sulphonic acid, particularly trifluoromethane sulphonic acid.

Additionally, poly(aryl ether ketone)s of the following formulas:

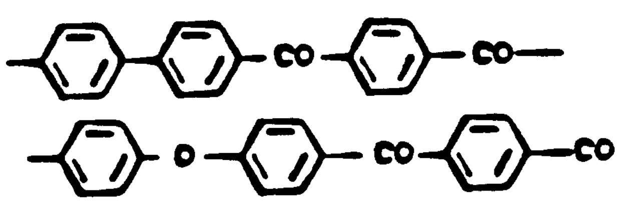

may also be prepared according to the process as described in, for example, U.S. Patent 4,398,020. In such a process,

(a) a mixture of substantially equimolar amounts of

(i) at least one aromatic diacyl halide of the formula:

YOC-Ar-COY

where -Ar- is a divalent aromatic radical, Y is halogen and COY is an aromatically bound acyl halide group, which diacyl halide is polymerizable with at least one aromatic compound of (a)(ii), and

(ii) at least one aromatic compound of the formula:

H-Ar′-H

wherein -Ar′- is a divalent aromatic radical and H is an aromatically bound hydrogen atom, which

compound is polymerizable with at least one diacyl halide of (a)(i), or

(b) at least one aromatic monoacyl halide of the formula:

H-Ar″-COW

where -Ar″- is a divalent aromatic radical and H is an aromatically bound hydrogen atom, W is halogen, and COW is an aromatically bound acyl halide group, which monoacyl halide is self-polymerizable, or

(c) a combination of (a) and (b) is reacted in the presence of a fluoroalkane sulphonic acid.

The term poly(aryl ketone) as used herein is meant to include homopolymers, copolymers, terpolymers and graft copolymers.

The poly(aryl ether ketone)s have a reduced viscosity of at least 0.4 to 5.0 dl/g, as measured in concentrated sulphuric acid at 25°C.

The poly (aryl ether ketone)s and poly(imide)are each used in the blend in amounts of from 2 to 98, preferably from 20 to 80 weight percent.

The blends of this invention may include mineral fillers such as carbonates including chalk, calcite and dolomite; silicates including mica, talc, wollastonite; silicon dioxide; glass spheres; glass powders; aluminum; clay; quartz; and the like. Also, reinforcing fibers such as fiberglass, carbon fibers, and the like may be used. The blend may also include additives such as titanium dioxide; thermal stabilizers, ultraviolet light stabilizers, plasticizers, and the like.

The blends of this invention may be fabricated into any desired shape, i.e., moldings, coatings, films, or fibers. They are particularly desirable for use as electrical insulation for electrical conductors.

EXAMPLES

The following examples serve to give specific illustrations of the practice of this invention but they are not intended in any way to limit the scope of this invention.

The following designations used in the Examples have the following meaning:

Poly(imide) I--a polymer containing repeat units of the following formula:

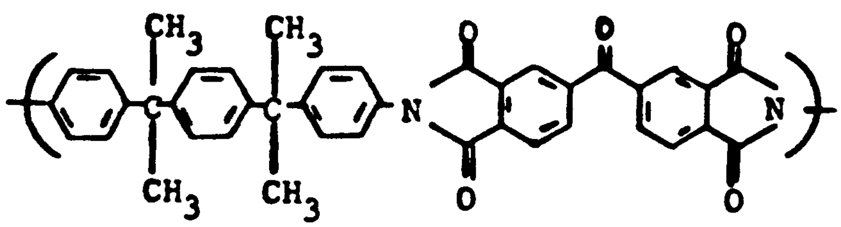

having a reduced viscosity of 0.21 as measured in N-methyl pyrolidone (NMP) at 25°C (0.2 g/100 ml solution) in its amide-acid form.

Poly(imide) II--a polymer containing repeat units of the following formula:

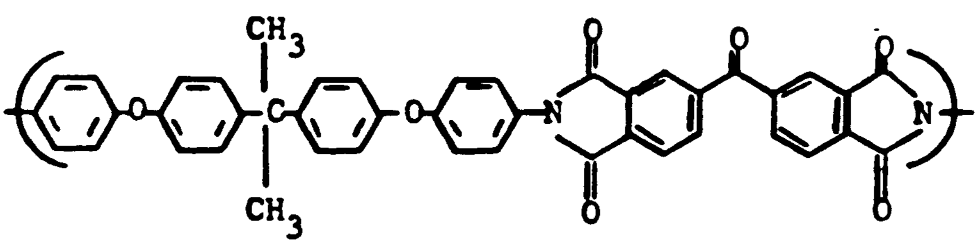

having a reduced viscosity of 0.30 as measured in NMP at 25°C (0.2 g/100 ml solution) in its amide-acid form.

Poly(imide) III--a copolymer containing repeat units of the following formula:

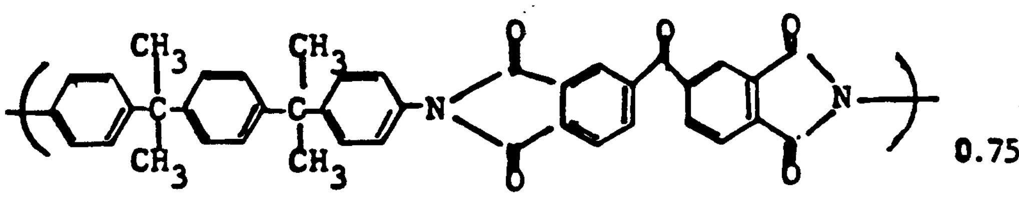

and

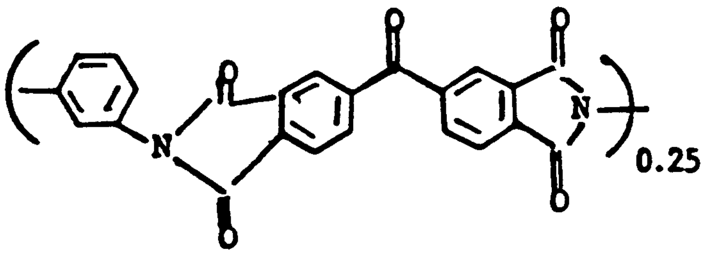

having a reduced viscosity of 0.16 as measured in NMP at 25°C (0.2 g/100 ml solution) in its amide-acid form.

Poly(imide) IV--a polymer containing repeat units of the following formula:

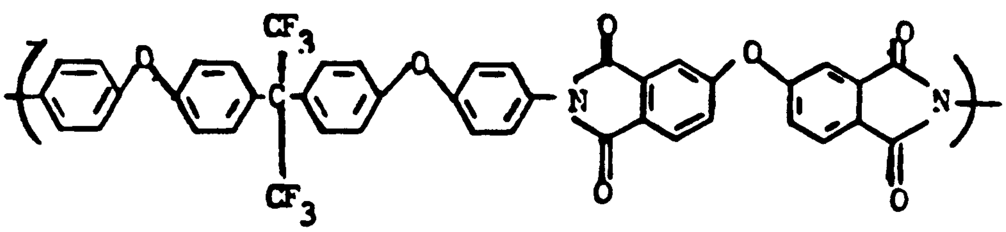

having a reduced viscosity of 0.40 as measured in NMP at 25°C (0.2 g/100 ml solution) in its amide-acid form.

Polyimide)IV--a copolymer containing repeating units of the following formula:

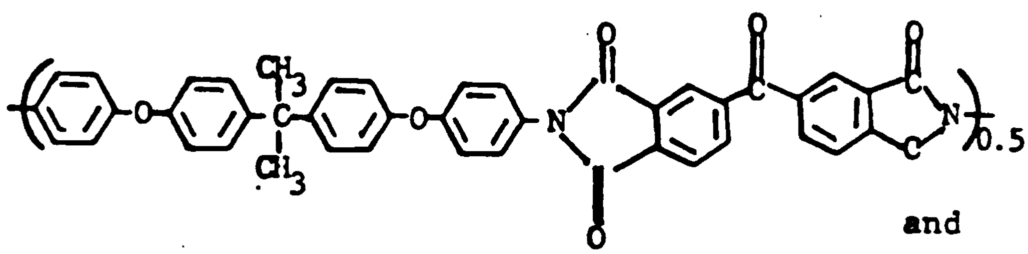

and

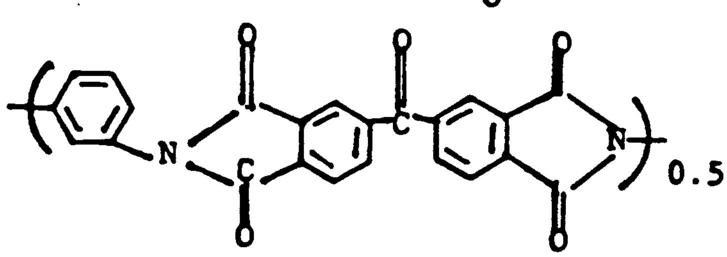

having a reduced viscosity of 0.25 as measured in NMP at 25°C (0.2/100ml solution) in its amide-acid form.

Poly(imides) I to V were prepared by the following method. To a 500ml round bottom flask, fitted with a thermometer and mechanical stirrer, was added (0.050 moles) of the diamine or mixture of diamines and 100g of dimethyl acetamide. The solution was stirred and cooled in an icebath to 10-15°C. Following addition of 16.11g (0.050 moles) of benzophenone tetracarboxylic acid dianhydride and 10.0g dimethyl acetamide, the amber colored solution was stirred for three hours at 20-23°C. The solution was then diluted with 200 ml of dimethyl acetamide. Imidization was accomplished by adding 11.85g (0.15 moles) of acetic

anhydride to the solution and stirring overnight at room temperature. The following day, the contents of the flask were coagulated in deionized water, rinsed twice with acetone and dried in a vacuum oven at 80 ° C.

Poly(aryl ether ketone) I--a polymer containing repeat units of the following formula:

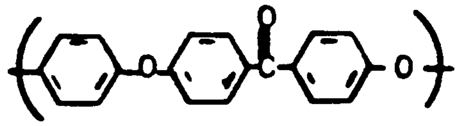

having a reduced viscosity of 1.2 dl/g as measured in 96 percent sulfuric acid solution (one percent polymer solution) at 25 ° C.

Poly(aryl ether ketone) II--a polymer containing repeat units of the following formula:

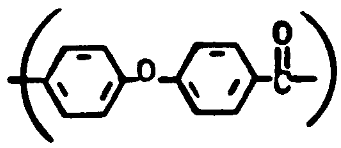

having a reduced viscosity of 1.9 dl/g as measured in 96 percent sulfuric acid solution (one percent polymer solution) at 25 ° C.

Poly(aryl ether ketone) III--a polymer containing repeat units of the following formula:

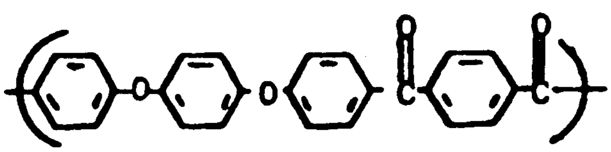

having a reduced viscosity of 1.2 dl/g as measured in 96 percent sulfuric acid solution (one percent polymer solution ) at 25 ° C.

Control A

Poly(imide) I was compression molded in a 102 x 102 x 0.5mm (4 x 4 x 0.020 inch) cavity mold at about 380 ° C in a South Bend hydraulic press. The sample was cooled while in the press by passing water through cooling channels within the platens. Cooling from 380 ° C to room temperature took about 10 minutes. 3mm (One-eighth inch) strips were shear cut from the molded product. These strips were tested for 1% secant modulus according to a procedure similar to ASTM D-638, tensile strength and elongation at break according to ASTM D-638, and pendulum impact strength. [Pendulum impact strength is measured as follows: A steel pendulum is used, cylindrical in shape with a diameter of 21 mm (0.83 inch) and weighing 0.71 kg (1.562 pounds); the striking piece, mounted almost at the top of the pendulum, is a cylinder 7.6 mm (0.3 inch) in diameter; film specimens, 102 mm (4 inches) long, 3.2 mm (0.125 inch) wide and about 25.4 to 762.0 μm (1 to 30 mils) thick, are clamped between the jaws of the tester so that the jaws are spaced 25.4 mm (1 inch) apart; the 3.2 mm (0.125 inch) width of the film is mounted vertically; the pendulum is raised to a constant height to deliver 1.54 J (1.13 foot pounds) at the specimen; when the pendulum is released the cylindrical striking piece hits the specimen with its flat end, breaks the film, and travels to a measured height beyond; the difference in the recovery height (i.e., the difference in the potential energy of the pendulum at the maximum point of the upswing) represents the energy absorbed by the specimen during the rupture; the impact strength, expressed in joules per cubic millimeter (foot-pounds per cubic inch), is obtained by dividing the pendulum energy loss by the volume of the specimen.] The results are shown in Table I.

The glass transition temperature of the molded plaque was measured by two methods. The modulus-resilience method described by Olabisi, et al., in Polymer-Polymer Miscibility, Academic Press, N.Y., p. 126, was used to determine the Tg of the as molded plaque at a heating rate of 1.6 ° C/min. The Tg of Control A was also determined by placing it in an aluminum DSC pan and heating it to 400 ° C for one minute in the

barrel of a Tinius-Olsen Extrusion Plastometer. The sample was then quenched rapidly to room temperature by bringing it in contact with a large metal block. The quenching process took 1-2 seconds. The sample was then placed in a DuPont 1090 thermal analyzer equipped with a dual DSC sample cell and the Tg (or Tgs) determined by methods well known in the filed of polymer science, by heating at 10°K/min. The results are shown in Table II.

After drying to remove absorbed moisture, a sample of the compression molded plaque was placed in the barrel of a Tinius-Olsen Extrusion Plastometer and the melt index determined according to ASTM D-1238 at 380°C using a 21660 gram weight. The melt index was repeated in the units of grams of polymer extrudate in 10-minute period after preheating for 10 minutes in the plastometer. The results are given in Table III.

Control B

Poly(imide) II was compression molded in a 102 x 102 x 0.5 mm (4 x 4 x 0.02 inch) cavity mold at about 380°C in a South Bend hydraulic press. The sample was cooled while in the press by passing water through cooling channels within the platens. The molded plaque was tested as in Control A and the results are given in Tables I, II and III.

Control C

Poly(imide) III was compression molded in a 102 x 102 x 0.5 mm (4 x 4 x 0.02 inch) cavity mold at about 400°C in a South Bend hydraulic press. The sample was cooled while in the press by passing water through cooling channels within the platens. The molded plaque was tested for mechanical properties and Tg as in Control A and the results are given in Tables I and II.

Control D

Poly(imide) IV was compression molded in a 102 x 102 x 0.5 mm (4 x 4 x 0.02 inch) cavity mold at about 400°C in a South Bend hydraulic press. The sample was cooled while in the press by passing water through cooling channels within the platens. The molded plaque was tested for mechanical properties and Tg as in Control A and the results are given in Tables I and II.

Control E

Poly(imide) V was compression molded in a 102 x 102 x 0.5 mm (4 x 4 x 0.02 inch) cavity mold at about 400°C in a South Bend hydraulic press. The sample was cooled while in the press by passing water through cooling channels within the platens. The molded plaque was tested for mechanical properties and Tg as in Control A and the results are given in Tables I and II.

Control F

Poly(aryl ether ketone) I was compression molded in a 102 x 102 x 0.5 mm (4 x 4 x 0.02 inch) cavity mold at about 380°C in a South Bend hydraulic press. The sample was cooled while in the press by passing water through cooling channels within the platens. The molded plaque was tested as in Control A and the results are given in Tables I, II, and III.

Control G

Poly(aryl ether ketone) II was compression molded in a 102 x 102 x 0.5 mm (4 x 4 x 0.02 inch) cavity mold at about 400°C in a South Bend hydraulic press. The sample was cooled while in the press by passing water through cooling channels within the platens. The molded plaque was tested for mechanical properties as in Control A and the results are given in Tables I and II.

Control H

Poly(aryl ether ketone) III was compression molded in a 102 x 102 x 0.5 mm (4 x 4 x 0.02 inch) cavity mold at about 400°C in a South Bend hydraulic press. The sample was cooled while in the press by passing water through cooling channels within the platens. The molded plaque was tested for mechanical

properties and Tg as in Control A and the results are given in Tables I and II.

Example I

50 parts by weight of Poly(imide) I and 50 parts by weight of Poly(aryl ether ketone) I were melt blended in a Brabender Plasticorder mixer at about 380°C. The blend was then compression molded in a 102 x 102 x 0.5 mm (4 x 4 x 0.020 inch) cavity mold at about 380°C in a South Bend hydraulic press. The blend was cooled while in the press by passing water through cooling channels within the platens. The molded blend was tested as in Control A and the results are given in Tables I, II and III.

Example II

50 parts by weight of Poly(imide) II and 50 parts by weight of Poly(aryl ether ketone) II were melt blended in a Brabender Plasticorder mixed at about 400°C. The blend was then compression molded in a 102 x 102 x 0.5 mm (4 x 4 x 0.020 inch) cavity mold at about 400°C in a South Bend hydraulic press. The blend was cooled while in the press by passing water through cooling channels within the platens. The molded blend was tested as in Control A and the results are given in Tables I, II, and III.

Example III

40 parts by weight of Poly(imide) III and 60 parts by weight of Poly(aryl ether ketone) I were melt blended in a Brabender Plasticorder mixer at about 400°C. The blend was then compression molded in a 102 x 102 x 0.5 mm (4 x 4 x 0.020 inch) cavity mold at about 400°C in a South Bend hydraulic press. The blend was cooled while in the press by passing water through cooling channels within the platens. The molded blend was tested for mechanical properties and Tg as in Control A and the results are given in Tables I and II.

Example IV

50 parts by weight of Poly(imide) IV and 50 parts by weight of Poly(aryl ether ketone) I were melt blended in a Brabender Plasticorder mixer at about 400°C. The blend was then compression molded in a 102 x 102 x 0.5 mm (4 x 4 x 0.020 inch) cavity mold at about 400°C in a South Bend hydraulic press. The blend was cooled while in the press by passing water through cooling channels within the platens. The molded blend was tested for mechanical properties and Tg as in Control A and the results are given in Tables I and II.

Example V

50 parts by weight of Poly(imide) V and 50 parts by weight of Poly(aryl ether ketone) III were melt blended in a Brabender Plasticorder mixer at about 400°C. The blend was then compression molded in a 102 x 102 x 0.5 mm (4 x 4 x 0.020 inch) cavity mold at about 400°C in a South Bend hydraulic press. The blend was cooled while in the press by passing water through cooling channels within the platens. The molded blend was tested for mechanical properties and Tg as in Control A and the results are given in Tables I and II.

## Table I

**Mechanical Properties of Poly(imide)/ Poly(aryl ether ketone) Blends at 23°C**

| Example | Description of The Composition | 1% Secant Modulus (ksi) in $kN/m^2$ | Tensile Strength (psi) | Yield Elongation (%) | Break Elongation (%) | Pendulum Impact Strength in $joules/m^3$ (ft-lb /in$^3$) |
|---|---|---|---|---|---|---|
| Control A | PI I | 299 | 100,000 (14,500) | 10.5 | 11 | 0.0055 (66) |
| Example I | 50% PI I<br>50% PAEK I | 288 | 86,200 (12,500) | 7.2 | 14 | 0.0098 (119) |
| Control F | PAEK I | 391 | 91,700 (13,300) | 7.5 | 33 | 0.0054 (65) |
| Control B | PI II | 301 | 99,300 (14,400) | 11 | 20 | 0.0066 (80) |
| Example II | 50% PI II<br>50% PAEK II | 326 | 95,200 (13,800) | 6.3 | 46 | 0.0089 (108) |
| Control G | PAEK II | 373 | 82,700 (12,000) | 5.0 | 31 | 0.0062 (75) |
| Control C | PI III | Too Brittle to Test | | | | |
| Example III | 40% PI III<br>60% PAEK I | 292 | 100,000 (14,500) | 9.0 | 19 | 0.0093 (113) |
| Control D | PI IV | 252 | 93,100 (13,500) | 11 | 17 | 0.0084 (102) |
| Example IV | 50% PI IV<br>50% PAEK I | 314 | 88,300 (12,800) | 6.9 | 40 | 0.0150 (182) |
| Control E | PI V | Too Brittle to Test | | | | |
| Example V | 50% PI V<br>50% PAEK III | 280 | 110,300 (16,000) | 10 | 11 | 0.0031 (38) |
| Control H | PAEK III | 407 | 100,000 (14,500) | - | 7.0 | 0.0024 (29) |

**Table II**

**Glass Transition Temperatures of Poly(imide)/Poly(aryl ether ketone) Blends**

| Example | Description of The Composition | Tg (°C) by Modulus-Resilience Method | Tg (°C) by DSC at 10°K/min |
|---|---|---|---|
| Control A | PI I | 265 | 263.4 |
| Example I | 50% PI I<br>50% PAEK I | 195 | 187.2 |
| Control F | PAEK I | 155 | 141 |
| Control B | PI II | 225 | 225.5 |
| Example II | 50% PI II<br>50% PAEK II | 200 | 184.8 |
| Control G | PAEK II | 165 | 152 |
| Control C | PI III | - | 260 |
| Example III | 40% PI III<br>60% PAEK I | 215 | 175 |
| Control D | PI IV | 240 | 238 |
| Example IV | 50% PI IV<br>50% PAEK III | 195 | - |
| Control E | PI V | - | 236 |
| Example V | 50% PI V<br>50% PAEK III | 220 | 191 |
| Control H | PAEK III | 170 | 150 |

Table III

| Melt Index of Poly(imide)/Poly(aryl ether ketone) Blends at 380 °C | | |
|---|---|---|
| Example | Description of The Composition | Melt Index After 10 min Preheat |
| Control A | PI I | 0 (no flow) |
| Example I | 50% PI I<br>50% PAEK I | 0.022 |
| Control F<br>Control B | PAEK I<br>PI II | 98<br>0.115 |
| Example II | 50% PI II<br>50% PAEK II | 0.130 |
| Control G | PAEK II | 31 |

The results given in Tables I through III demonstrate that:

1) The addition of selected poly(imides) to poly(aryl ether ketones) results in miscible blends as indicated by the single Tg intermediate between those of the constituents.

2) When miscibility of the two constituents is indeed achieved, the Tg of the poly(aryl ether ketone) is significantly raised by the addition of the poly(imide).

3) When the poly(imide)/poly(aryl ether ketone) blend is miscible, an improvement in the impact strength may be achieved over either that of the poly(imide) or of the poly(aryl ether ketone).

4) The addition of a poly(aryl ether ketone) to a poly(imide) improves the melt flow of the latter. Clearly, therefore, the addition of the poly(aryl ether ketone) improves the melt processability of the poly(imide).

Example VI demonstrates that not all poly(imides) and poly(aryl ether ketones) are miscible.

Control I

A polyimide of the structural formula

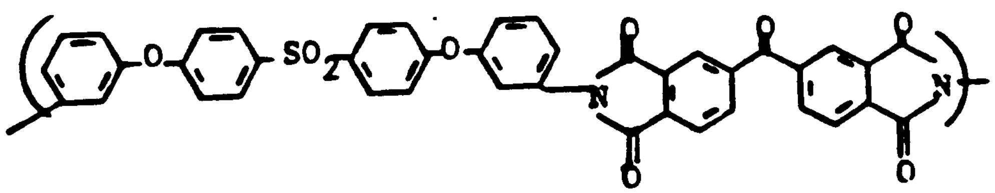
PI VI

PI VI

with a reduced viscosity of 0.52 dl/g as measured in NMP at 25 °C (0.2 wt % polymer solution) was molded into a 102 x 102 x 0.5 mm (4 x 4 x 0.020 inch) plaque at 380 °C by the procedure described in Control A. The mechanical properties were determined as in Control A. The Tg was determined by the modulus-resilience method described in Control A. The results are shown in Table IV.

Example VI

50 parts by weight of the poly(imide) of Control I and 50 parts by weight of Poly(aryl ether ketone) I were mixed in a Brabender plasticorder mixer at about 380 °C. The blend was molded and tested as described in Control H. The results are shown in Table IV.

Table IV

| Mechanical Properties of Immiscible Poly(imide)/Poly(aryl ether ketone) Blends | | |
|---|---|---|
| Example | Control I | Example VI |
| Description | PI VI | 50% PI VI<br>50% PAEK I |
| 1% Secant Modulus (ksi) | 354 | 381 |
| Tensile Strength in $kN/m^2$ (psi) | 102,700 (14,900) | 102,700 (14,900) |
| Yield Elongation (%) | none | 6.0 |
| Break Elongation (%) | 7.0 | 7.0 |
| Pendulum Impact Strength in $joules/mm^3$ ($ft\text{-}lb/in^3$) | 0.0012 (14) | 0.0012-0.0086 (14-104) |
| Tg (°C) | 215 | 150,215 |

The existence of two Tgs in the material of Example VI clearly demonstrates that not every poly(imide)/poly(aryl ether ketone) blend is miscible. Even though Poly(imide) II is similar in structure to Poly(imide) VI, the former is miscible with PAEKS while the latter is not.

## Claims

**1.** A blend comprising:

(a) at least one poly(aryl ether ketone) having a reduced viscosity of from 0.4 to 5.0 dl/g, as measured in concentrated sulphuric acid at 25°C, in amount from 2 to 98% by weight, and

(b) at least one thermoformable polyimide homopolymer or copolymer in amount from 2 to 98% by weight having repeating units of the formula:

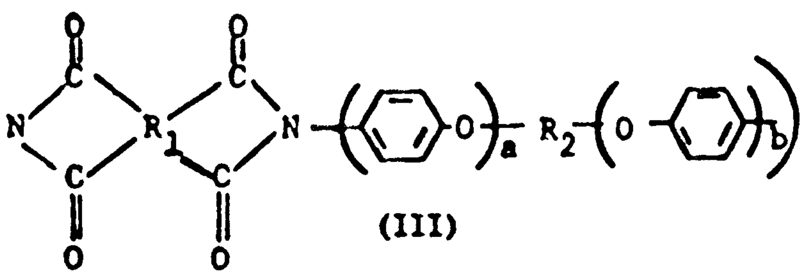

(III)

wherein

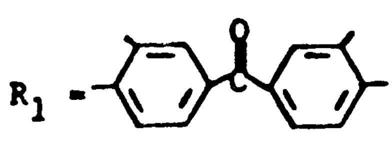

and

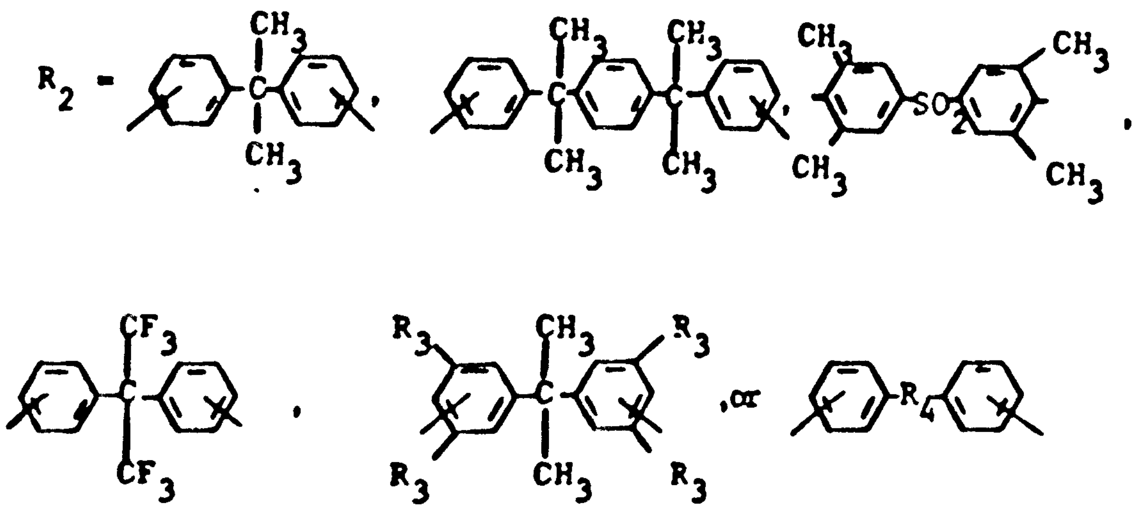

and a and b are 0 or 1 and may be the same or different.

$R_3$ is a $C_1$ to $C_5$ alkyl radical, and

$R_4$ is a divalent, saturated or unsaturated aliphatic hydrocarbon radical, particularly an alkylene or alkylidene radical having 1 to 3 carbon atoms or a cycloalkylidene or cycloalkylene radical having up to and including 9 carbon atoms

provided that said polyimide does not have the structure:

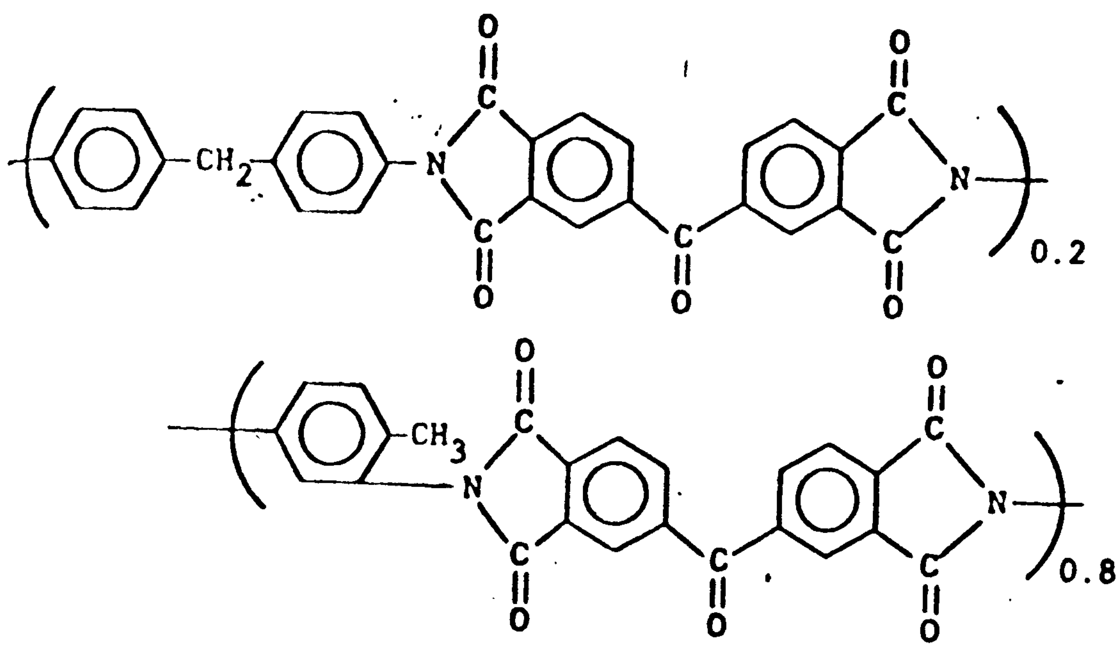

**2.** A blend as claimed in claim 1 wherein the poly(aryl ether ketone) contains repeating units of one or more of the following formulae:

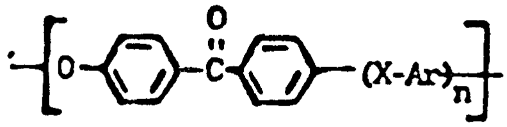

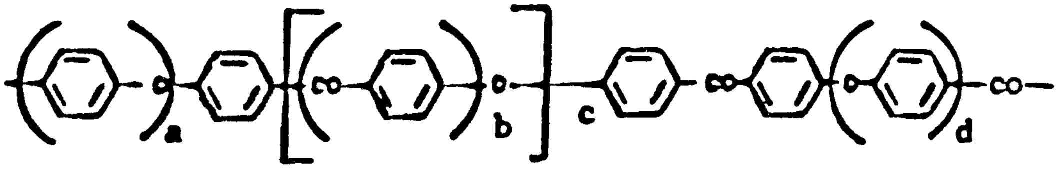

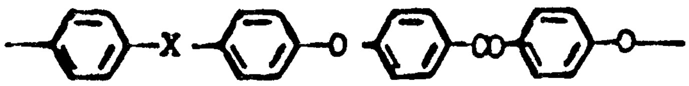

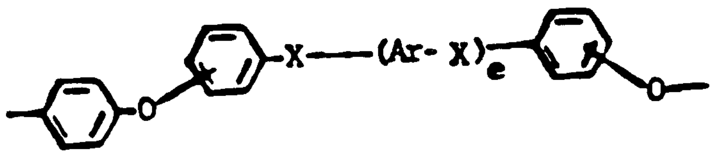

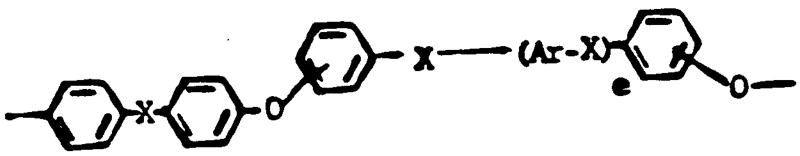

wherein Ar is independently a divalent aromatic radical selected from phenylene, biphenylene or naphthylene, X is independently O, C, or a direct bond and n is an integer of from 0 to 3, b, c, d and e are 0 to 1 and a is an integer of 1 to 4 and preferably d is 0 when b is 1.

**3.** A blend as claimed in claim 1 wherein the poly(aryl ether ketone) is one or more of the following:

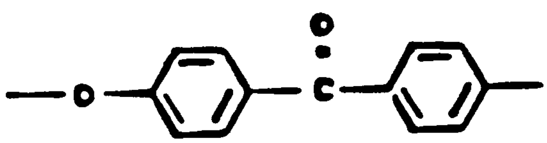

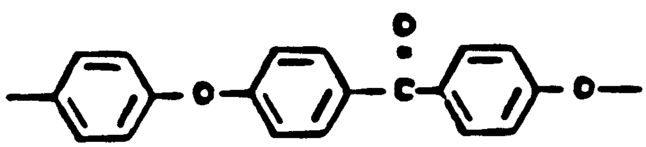

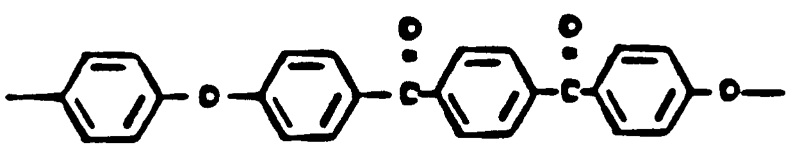

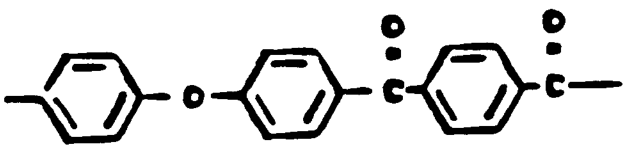

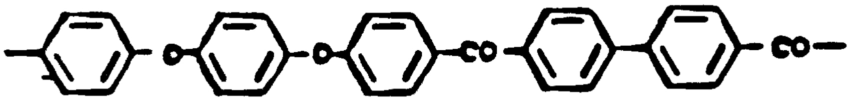

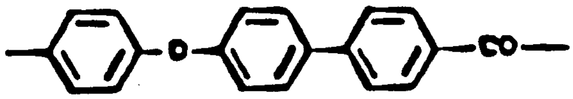

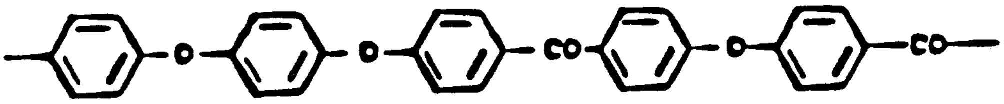

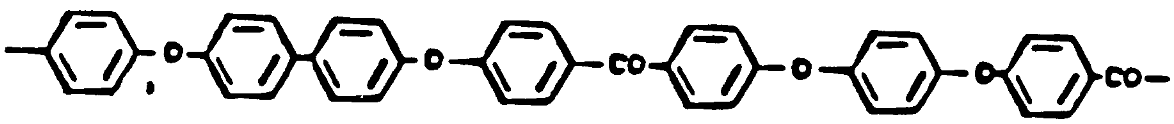

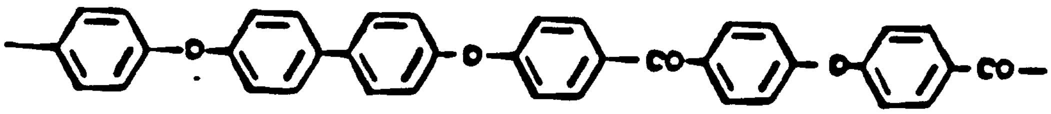

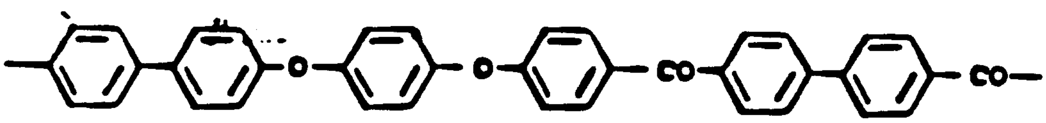

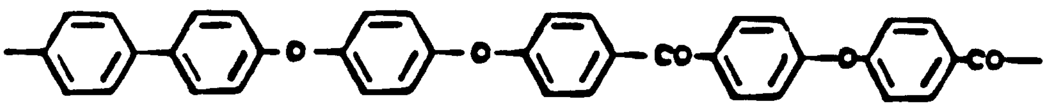

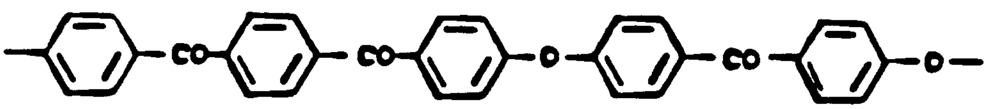

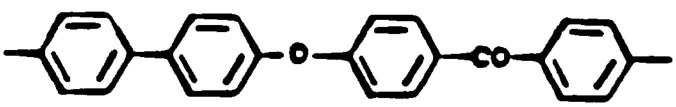

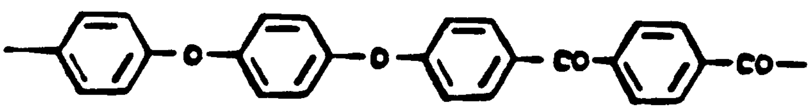

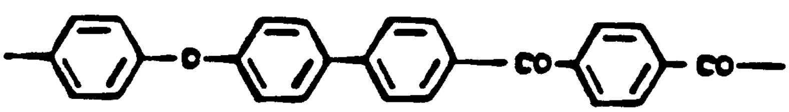

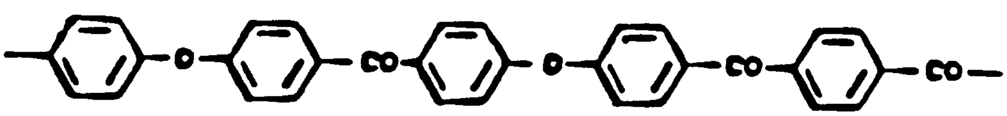

**4.** A blend as claimed in claim 1 wherein the poly(aryl ether ketone) is of the following formula:

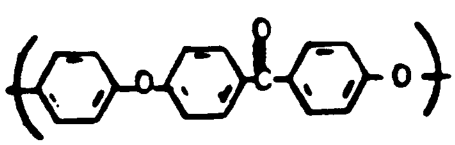

**5.** A blend as claimed in claim 1 wherein the poly(aryl ether ketone) is of the following formula:

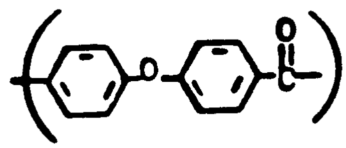

**6.** A blend as claimed in claim 1 wherein the poly(aryl ether ketone) is of the following formula:

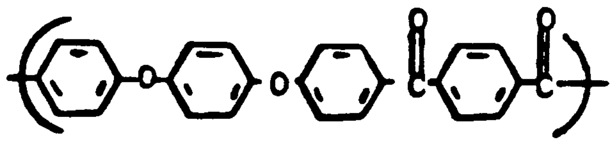

**7.** A blend as claimed in claim 1 where the poly(imide) is of the formula:

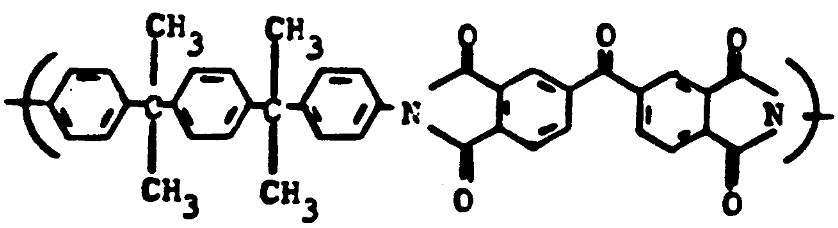

**8.** A blend as claimed in claim 1 where the poly(imide) is of the formula:

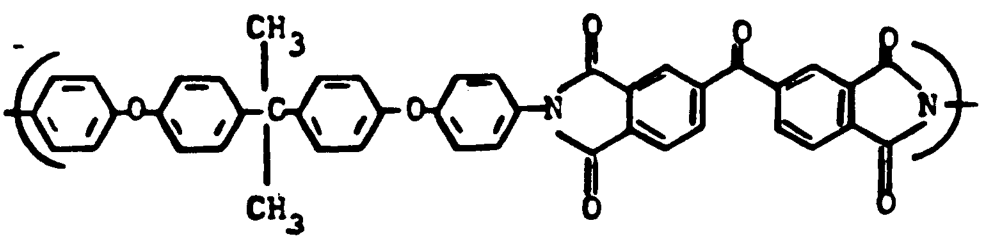

**9.** A blend as claimed in claim 1 where the poly(imide) is of the formula:

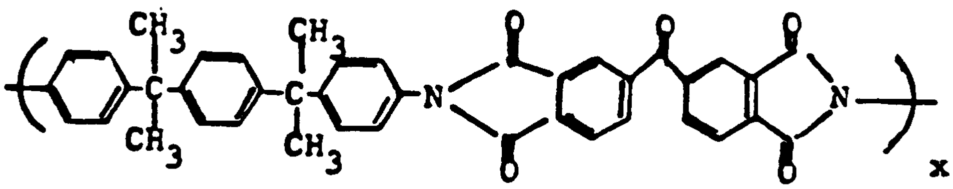 and

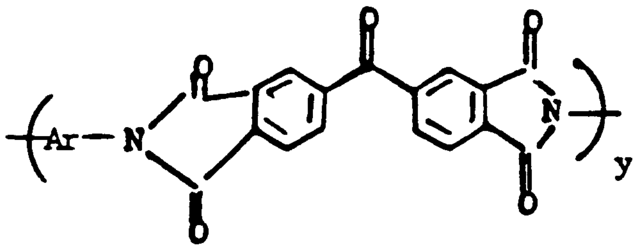

wherein x is 0.5 to 1.0 and y is 1-x, and Ar is selected from one or more of the following:

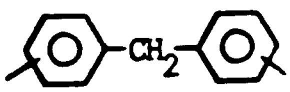

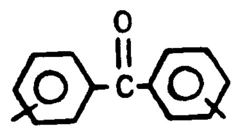

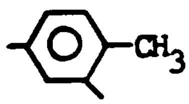

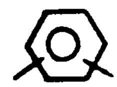

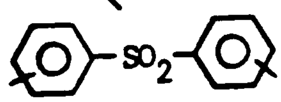

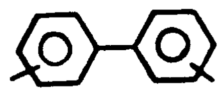

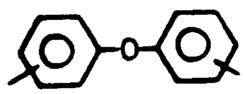

**10.** A blend as claimed in claim 1 where the poly(imide) is of the formula:

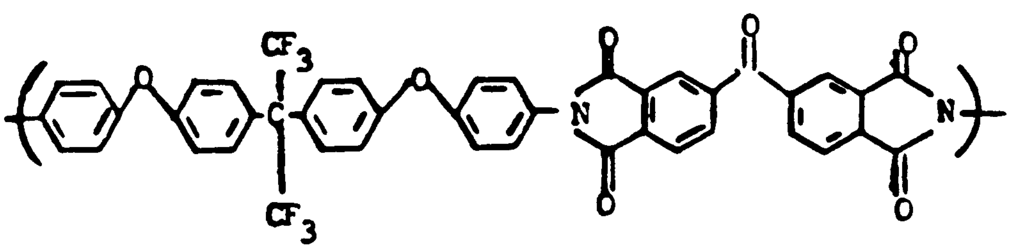

**11.** A blend as claimed in claim 1 where the poly(imide) is of the formula:

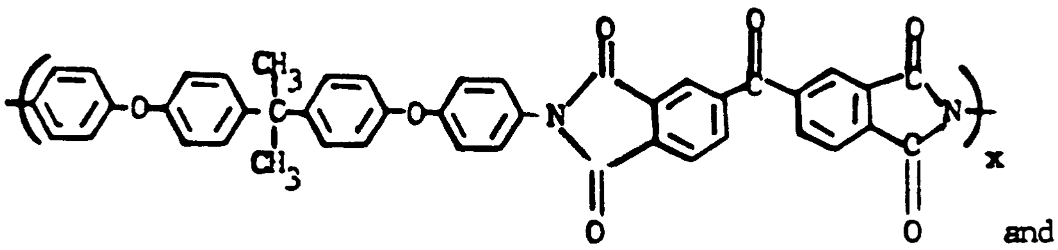

and

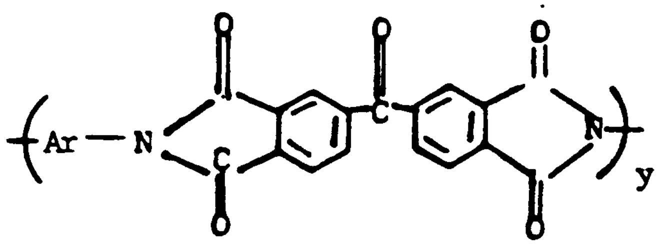

wherein x is 0.5 to 0.1 and y is 1-x, and Ar is selected from one or more of the following:

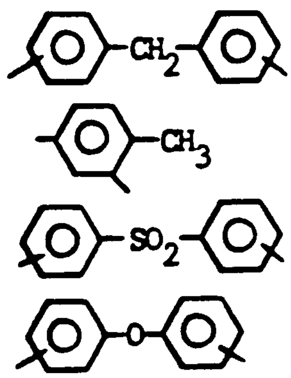

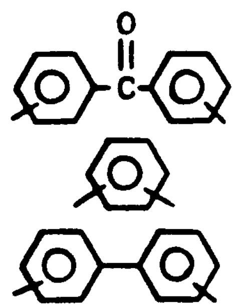

## Revendications

1. Mélange comprenant :
   a) au moins une poly(aryléther-cétone) ayant une viscosité réduite de 0,4 à 5,0 dl/g, mesurée dans l'acide sulfurique concentré à 25 ° C, en quantité de 2 à 98 % en poids, et
   b) au moins un homopolymère ou copolymère polyimidique thermoformable en quantité de 2 à 98 % en poids portant des motifs répétés de formule :

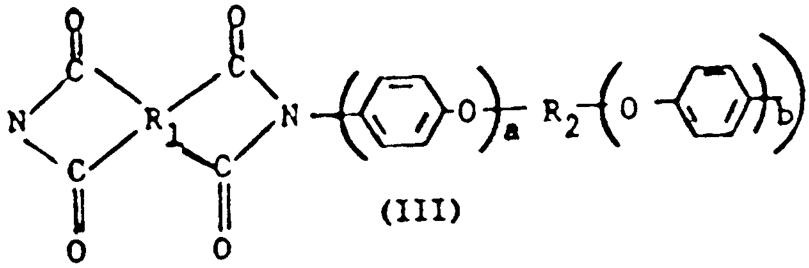

(III)

dans laquelle $R_1$ représente

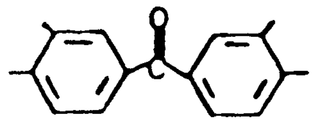

et $R_2$ représente

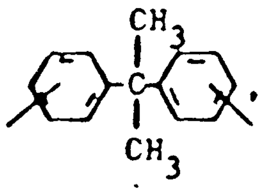,
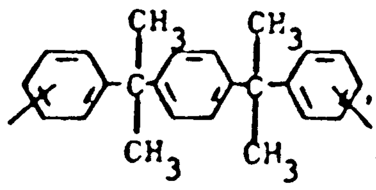,
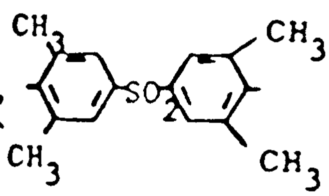,

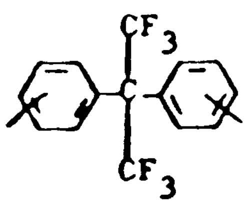,
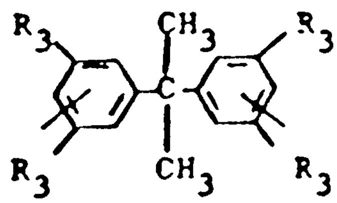 ou
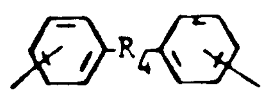

et a et b ont la valeur 0 ou 1 et peuvent être identiques ou différents ;

$R_3$ est un radical alkyle en $C_1$ à $C_5$, et

$R_4$ est un radical hydrocarboné aliphatique divalent saturé ou non saturé, en particulier un radical alkylène ou alkylidène ayant 1 à 3 atomes de carbone ou un radical cycloalkylidène ou cycloalkylène ayant jusqu'à et y compris 9 atomes de carbone

sous réserve que ledit polyimide n'ait pas la structure :

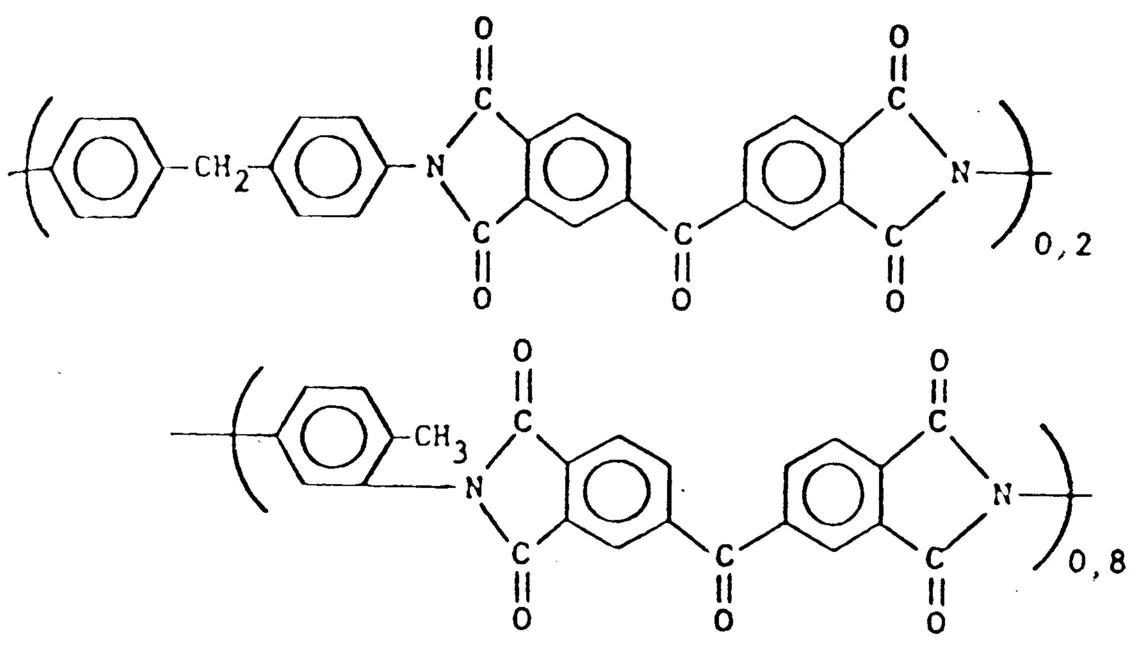

**2.** Mélange suivant la revendication 1, dans lequel la poly(aryléther-cétone) contient des motifs répétés d'une ou plusieurs des formules suivantes :

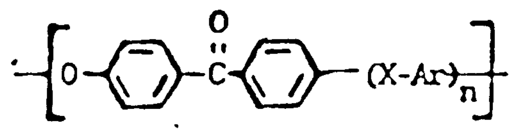

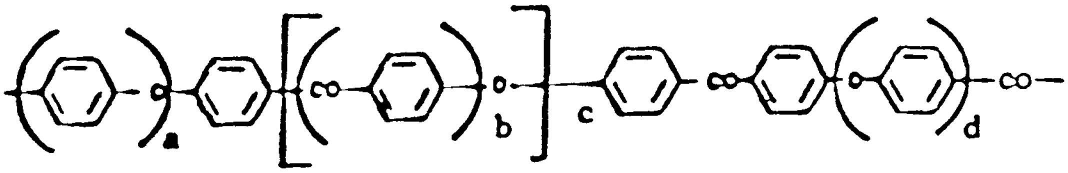

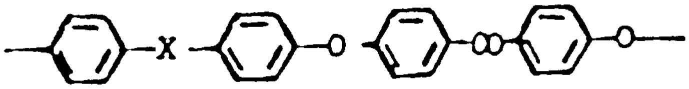

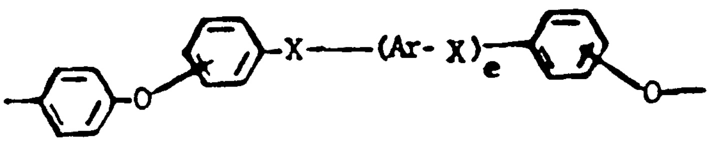

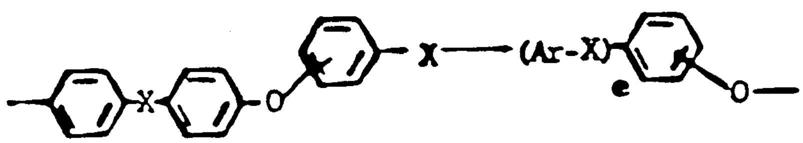

où Ar représente indépendamment un radical aromatique divalent choisi entre phénylène, biphénylène ou naphtylène, X représente indépendamment O, C ou une liaison simple et n est un nombre entier de 0 à 3, b, c, d et e ont une valeur de 0 à 1 et a est un nombre entier de 1 à 4 et, de préférence, d est égal à 0 lorsque b est égal 1.

3. Mélange suivant la revendication 1, dans lequel la poly(aryléther-cétone) répond à une ou plusieurs des formules suivantes :

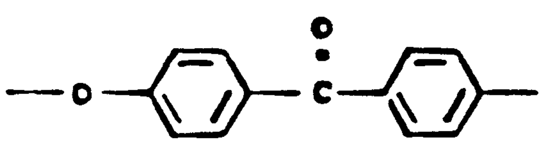

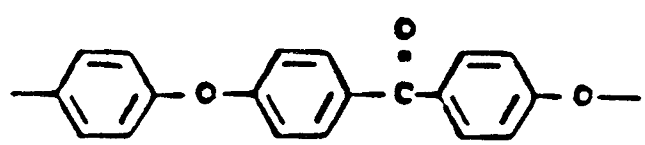

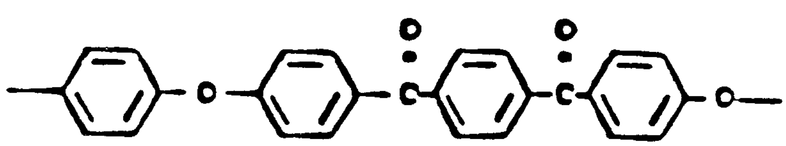

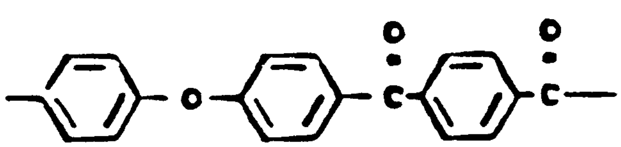

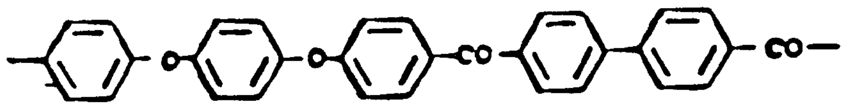

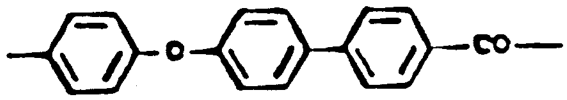

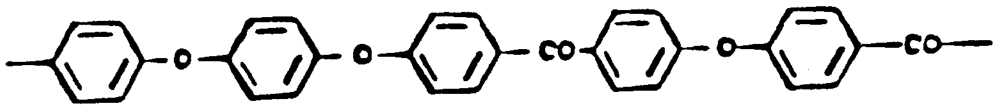

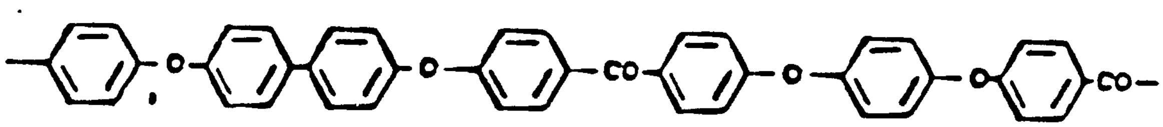

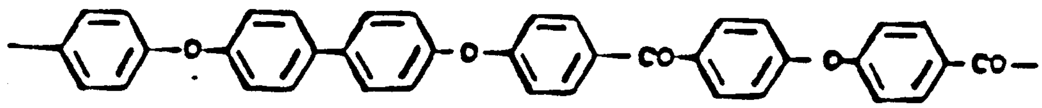

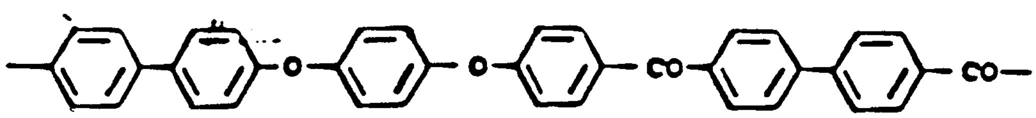

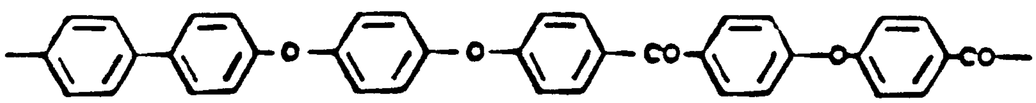

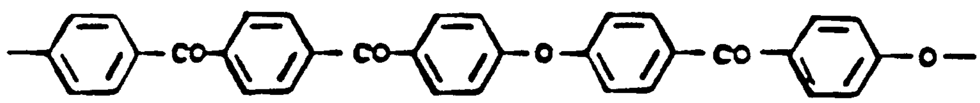

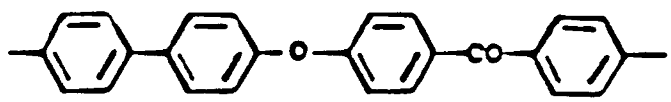

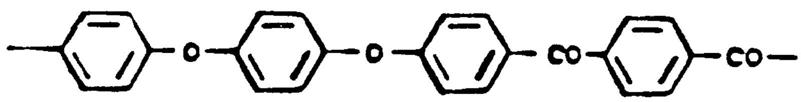

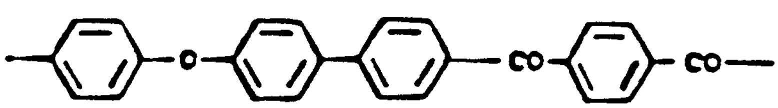

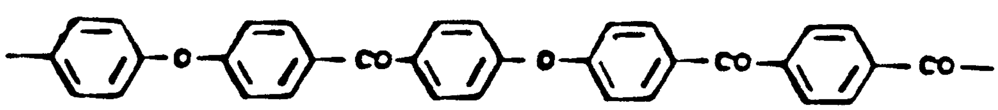

**4.** Mélange suivant la revendication 1, dans lequel la poly(aryléther-cétone) répond à la formule suivante :

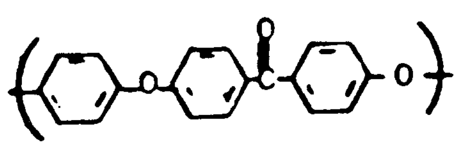

**5.** Mélange suivant la revendication 1, dans lequel la poly(aryléther-cétone) répond à la formule suivante :

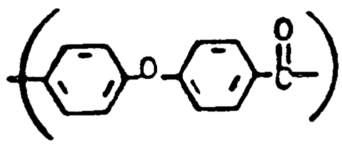

6. Mélange suivant la revendication 1, dans lequel la poly(aryléther-cétone) répond à la formule suivante :

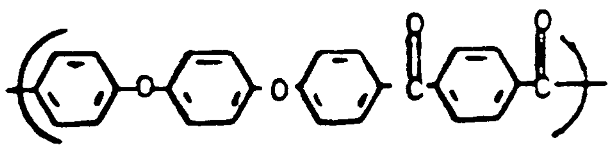

7. Mélange suivant la revendication 1, dans lequel le poly(imide) répond à la formule suivante :

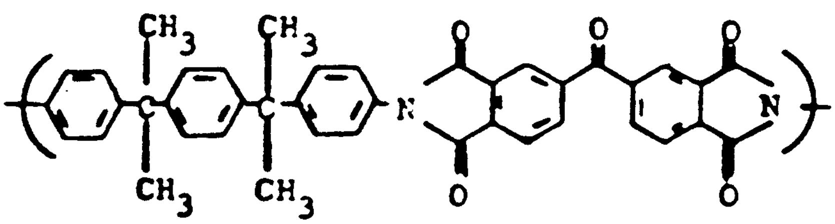

8. Mélange suivant la revendication 1, dans lequel le poly(imide) répond à la formule suivante :

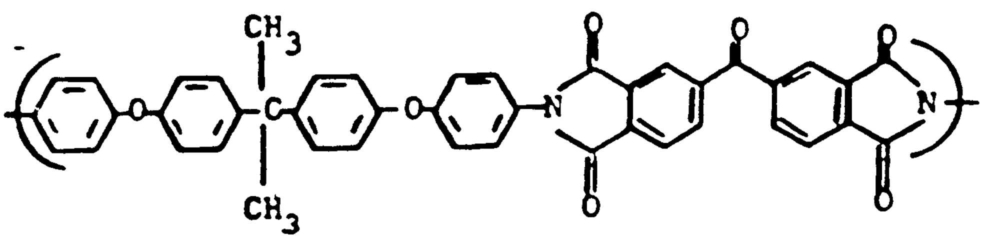

9. Mélange suivant la revendication 1, dans lequel le poly(imide) répond aux formules :

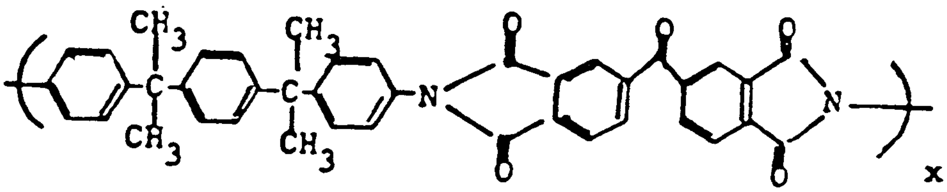 et

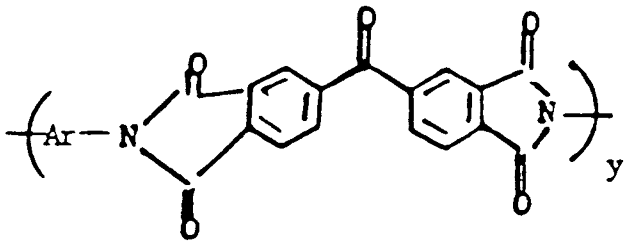

dans lesquelles x a une valeur de 0,5 à 1,0 et y est égal à 1-x, et Ar répond à une ou plusieurs des formules suivantes :

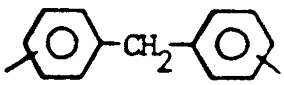

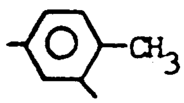

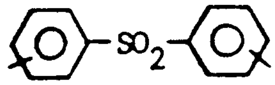

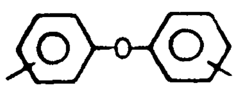

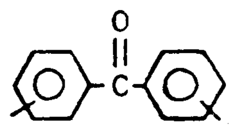

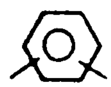

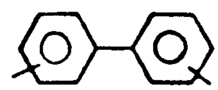

**10.** Mélange suivant la revendication 1, dans lequel le poly(imide) répond à la formule :

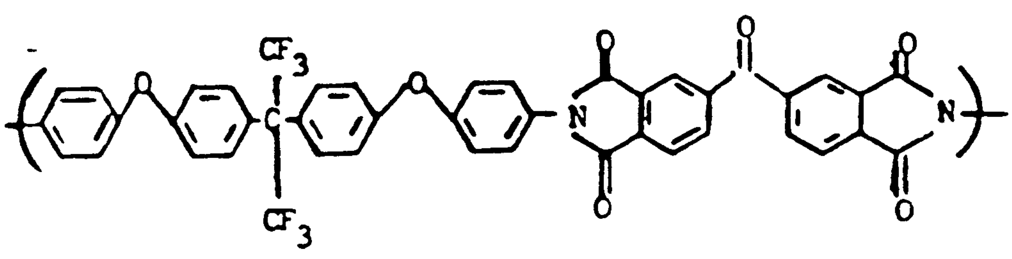

**11.** Mélange suivant la revendication 1, dans lequel le poly(imide) répond aux formules :

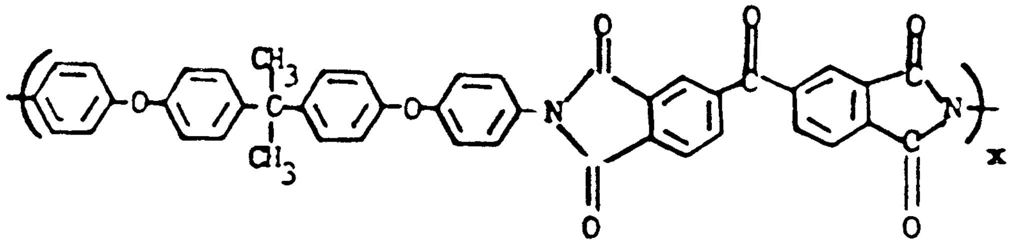

et

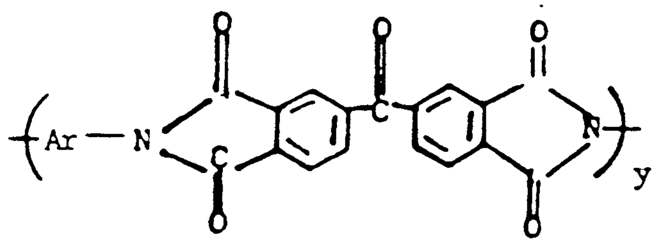

dans lesquelles x a une valeur de 0,5 à 0,1 et y représente 1-x, et Ar répond à une ou plusieurs des formules suivantes

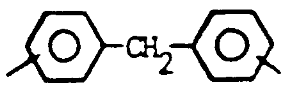
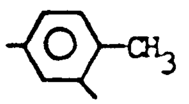
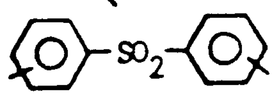
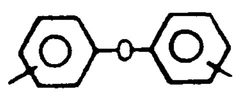
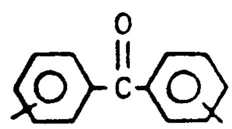
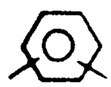
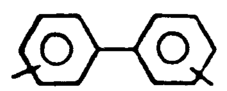

**Patentansprüche**

**1.** Mischung, umfassend

(a) mindestens ein Poly(aryletherketon) mit einer reduzierten Viskosität von 0,4 bis 5,0 dl/g, gemessen in konzentrierter Schwefelsaure bei 25 ° C, in einer Menge von 2 bis 98 Gewichtsprozent, und

(b) mindestens ein warmformbares Polyimid-Homopolymer oder -Copolymer in einer Menge von 2 bis 98 Gewichtsprozent mit Struktureinheiten der Formel:

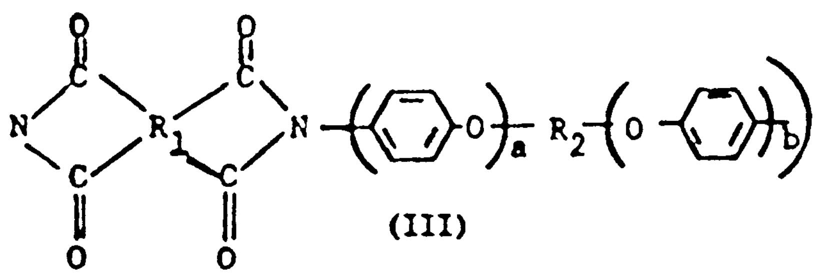

(III)

worin

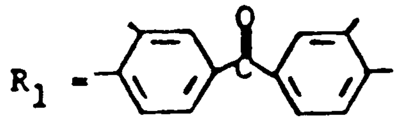

und

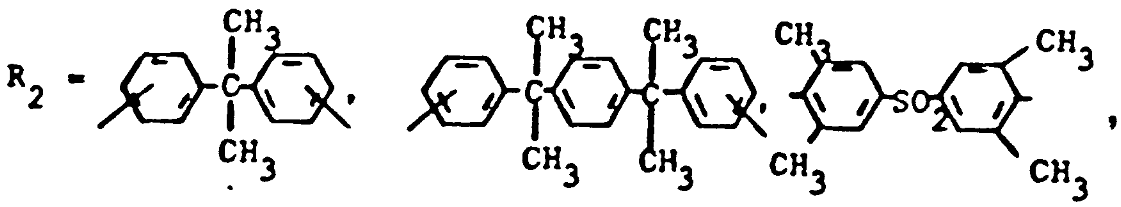

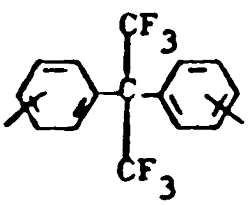

,

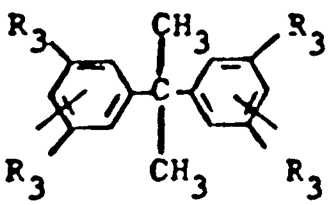

oder

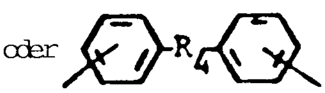

und a und b 0 oder 1 sind und gleich oder verschieden sein können,
$R_3$ ein $C_1$ bis $C_5$ Alkylrest ist und
$R_4$ ein zweiwertiger, gesättigter oder ungesättigter aliphatischer Kohlenwasserstoffrest ist, insbesondere ein Alkylen- oder Alkylidenrest mit 1 bis 3 Kohlenstoffatomen oder ein Cycloalkyliden- oder Cycloalkylenrest mit bis zu einschließlich 9 Kohlenstoffatomen,
mit der Maßgabe, daß das Polyimid nicht die Struktur hat:

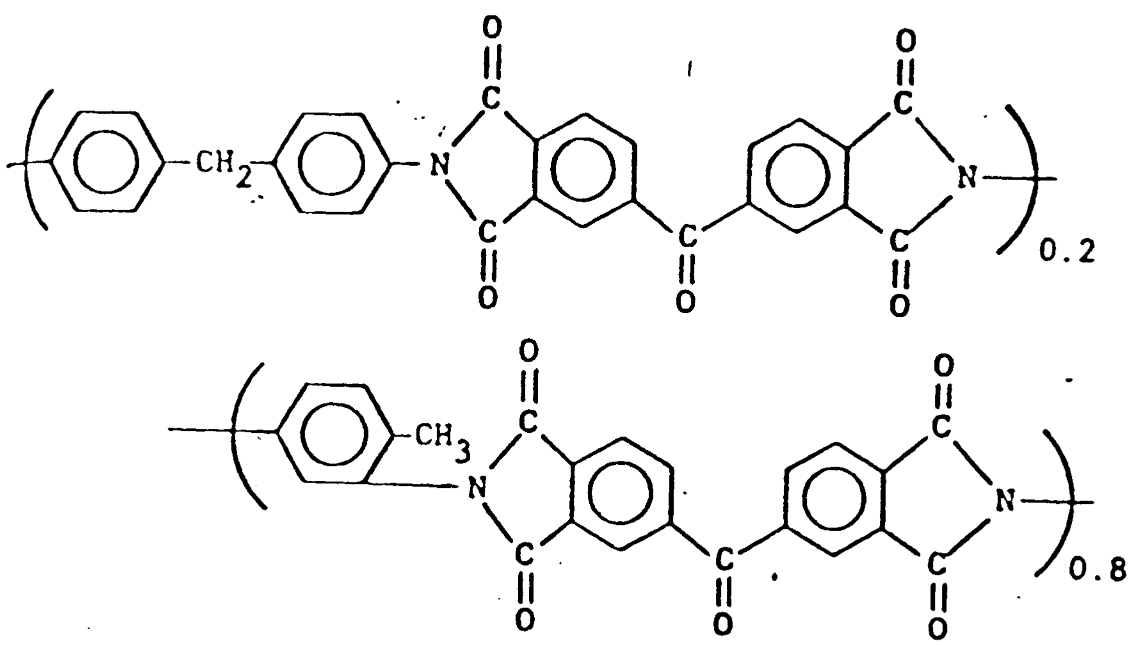

**2.** Mischung nach Anspruch 1, worin das Poly(aryletherketon) Struktureinheiten von einer oder mehreren der folgenden Formeln enthält:

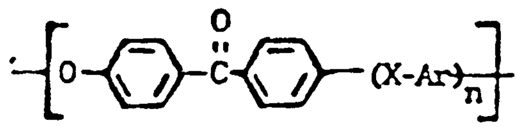

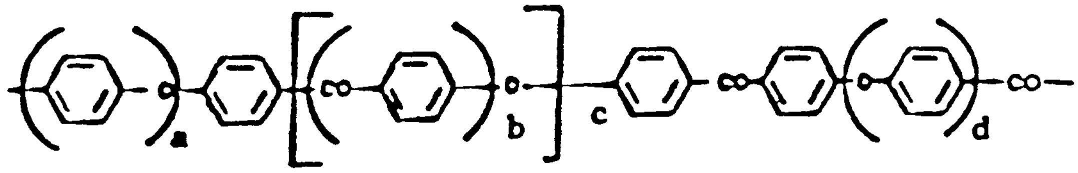

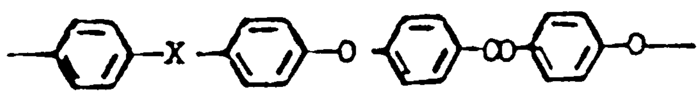

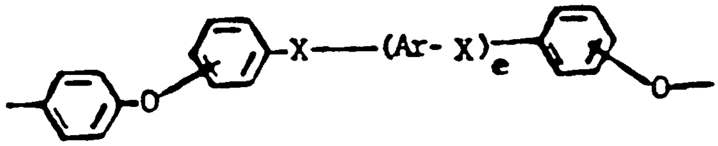

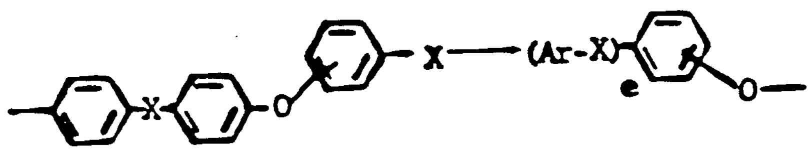

worin Ar unabhängig ein zweiwertiger aromatischer Rest ist, ausgewählt aus Phenylen, Biphenylen oder Naphthylen, X unabhängig O, C oder eine direkte Bindung ist und n eine ganze Zahl von 0 bis 3 ist, b, c, d und e 0 bis 1 sind und a eine ganze Zahl von 1 bis 4 ist und vorzugsweise d 0 ist, wenn b 1 ist.

**3.** Mischung nach Anspruch 1, worin das Poly(aryletherketon) eines oder mehrere der folgenden ist:

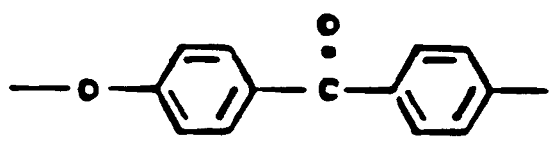

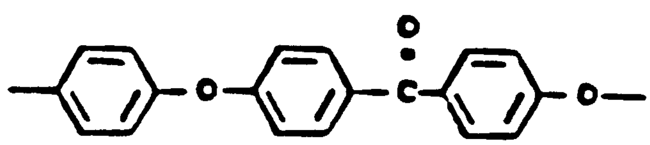

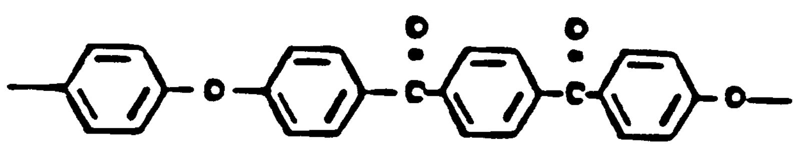

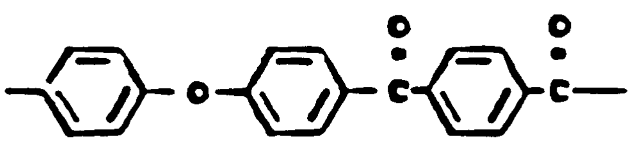

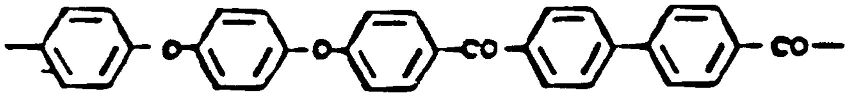

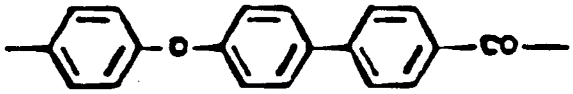

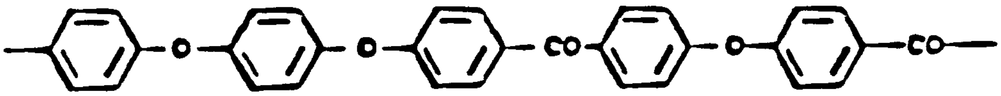

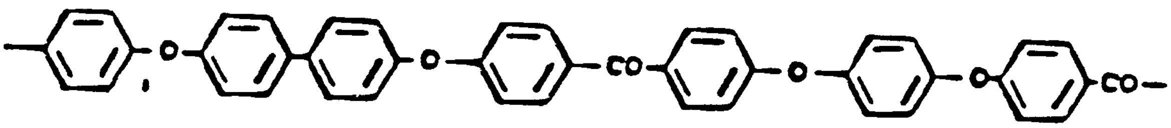

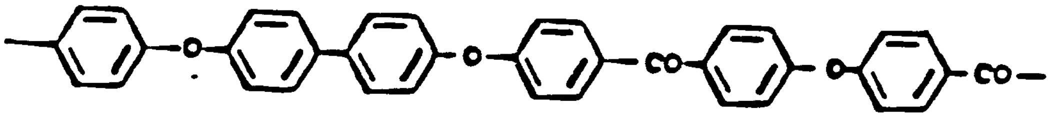

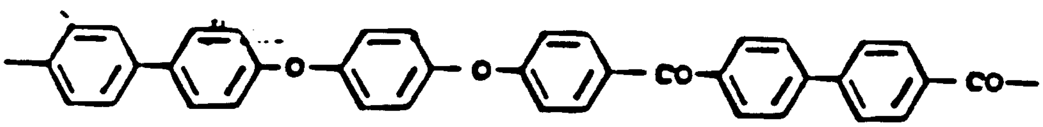

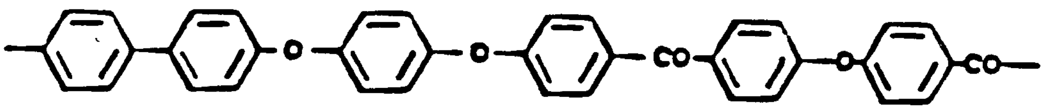

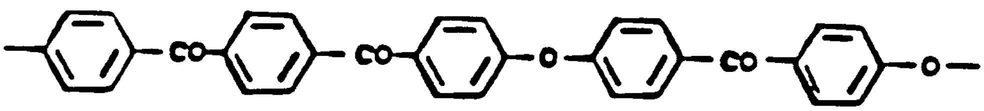

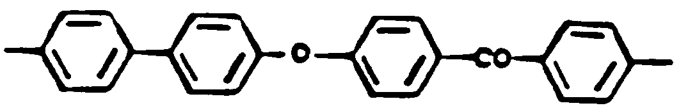

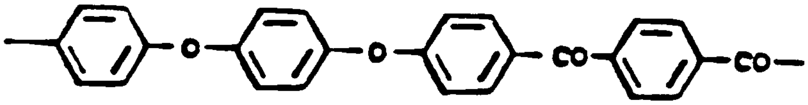

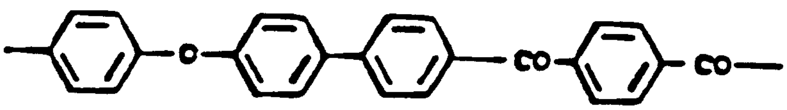

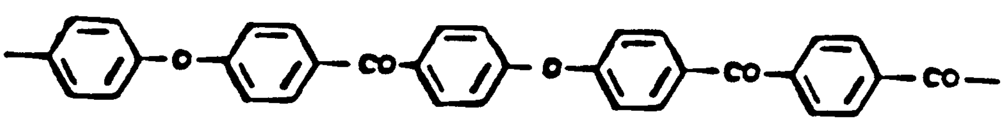

**4.** Mischung nach Anspruch 1, worin das Poly(aryletherketon) die folgende Formel hat:

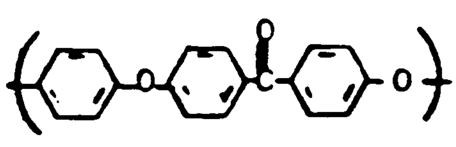

**5.** Mischung nach Anspruch 1, worin das Poly(aryletherketon) die folgende Formel hat:

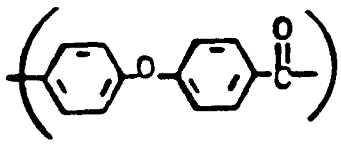

6. Mischung nach Anspruch 1, worin das Poly(aryletherketon) die folgende Formel hat:

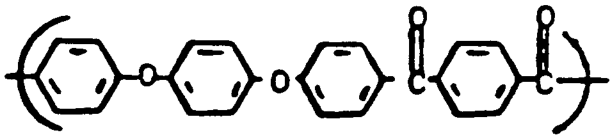

7. Mischung nach Anspruch 1, worin das Polyimid die folgende Formel hat:

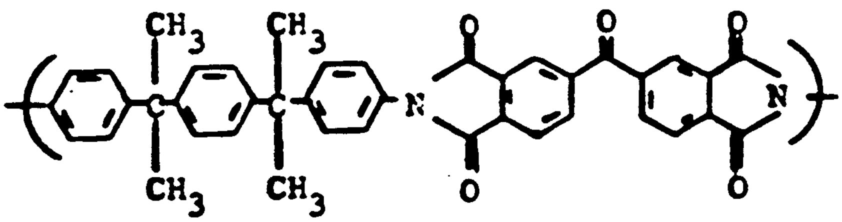

8. Mischung nach Anspruch 1, worin das Polyimid die folgende Formel hat:

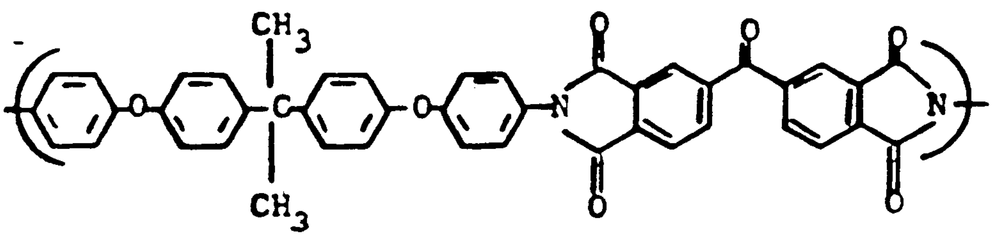

9. Mischung nach Anspruch 1, worin das Polyimid die folgende Formel hat:

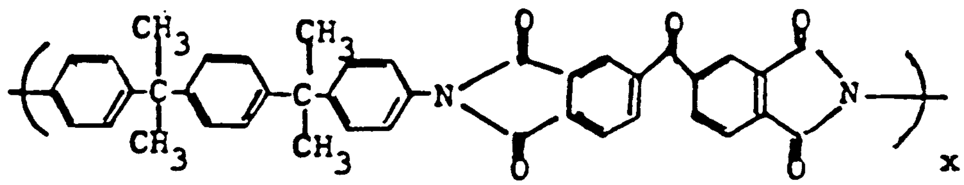 und

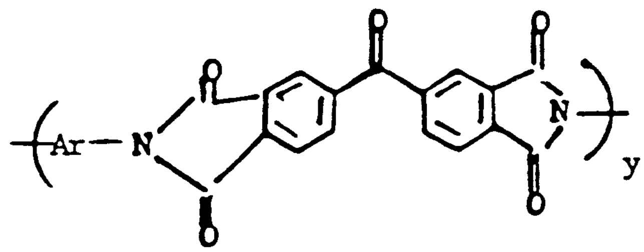

worin x 0,5 bis 1,0 ist und y 1-x ist und Ar ausgewählt ist aus einem oder mehreren der folgenden:

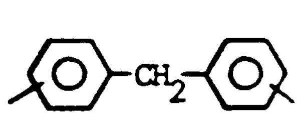

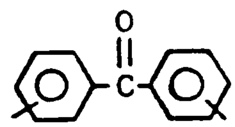

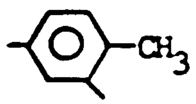

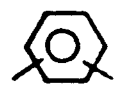

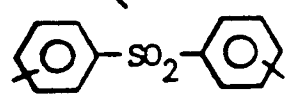

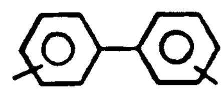

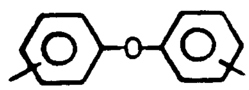

**10.** Mischung nach Anspruch 1, worin das Polyimid die folgende Formel hat:

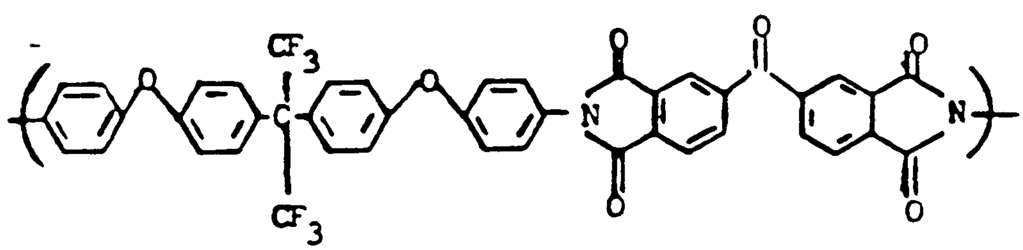

**11.** Mischung nach Anspruch 1, worin das Polyimid die folgende Formel hat:

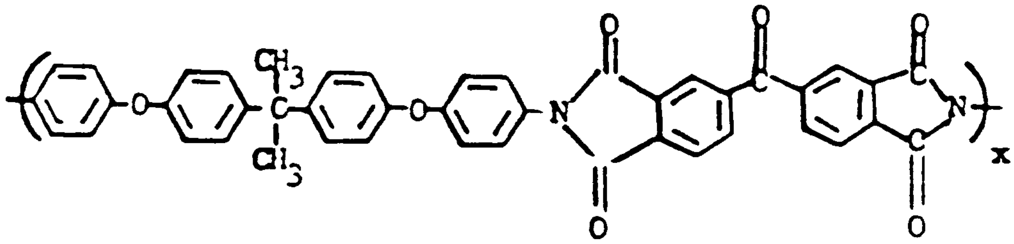

und

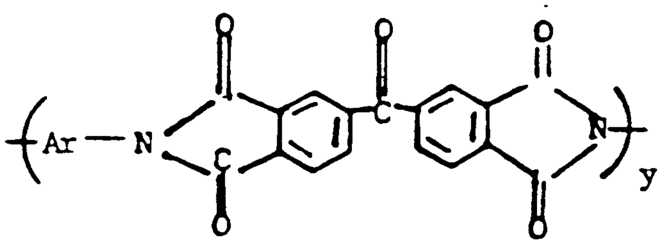

worin x 0,5 bis 0,1 ist und y 1-x ist und Ar ausgewählt ist aus einem oder mehreren der folgenden: